(19) Europäisches Patentamt / European Patent Office / Office européen des brevets

(11) **EP 3 970 403 B1**

(12) **EUROPEAN PATENT SPECIFICATION**

(45) Date of publication and mention of the grant of the patent:
**01.03.2023 Bulletin 2023/09**

(21) Application number: **20727870.6**

(22) Date of filing: **15.05.2020**

(51) International Patent Classification (IPC):
$H04W\ 24/02^{(2009.01)}$    $H04W\ 72/04^{(2009.01)}$
$H04W\ 24/04^{(2009.01)}$    $H04L\ 5/00^{(2006.01)}$
$H04W\ 76/19^{(2018.01)}$    $H04W\ 76/23^{(2018.01)}$

(52) Cooperative Patent Classification (CPC):
**H04W 24/02; H04L 5/0098; H04L 5/001;**
H04W 24/04; H04W 76/23

(86) International application number:
**PCT/SE2020/050507**

(87) International publication number:
**WO 2020/231320 (19.11.2020 Gazette 2020/47)**

(54) **METHOD AND SYSTEM FOR ADAPTING CONCURRENT BANDWIDTH PART SWITCHING ON MULTIPLE LINKS IN A WIRELESS NETWORK**

VERFAHREN UND SYSTEM ZUR ANPASSUNG EINER GLEICHZEITIGEN BANDBREITENTEILUMSCHALTUNG BEI MEHREREN VERBINDUNGEN IN EINEM DRAHTLOSEN NETZWERK

PROCÉDÉ ET SYSTÈME POUR ADAPTER UNE COMMUTATION DE PARTIE DE BANDE PASSANTE SIMULTANÉE SUR DE MULTIPLES LIAISONS DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2019 US 201962848403 P**

(43) Date of publication of application:
**23.03.2022 Bulletin 2022/12**

(73) Proprietor: **Telefonaktiebolaget LM Ericsson (publ)**
**164 83 Stockholm (SE)**

(72) Inventors:
• **KAZMI, Muhammad**
  **174 64 SUNDBYBERG (SE)**
• **THANGARASA, Santhan**
  **162 44 VÄLLINGBY (SE)**

(74) Representative: **Ericsson**
**Patent Development**
**Torshamnsgatan 21-23**
**164 80 Stockholm (SE)**

(56) References cited:
**WO-A1-2020/063807**

• **SAMSUNG: "Remaining Issues on BWP and CA", 3GPP DRAFT; R1-1812962 REMAINING ISSUES ON BWP AND CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 November 2018 (2018-11-11), XP051554938, Retrieved from the Internet: URL:http://www.3gpp.org/ftp/Meetings%5F3GPP%5FSYNC/RAN1/Docs/R1%2D1812962%2Ezip [retrieved on 2018-11-11]**

- MEDIATEK INC: "Summary of Bandwidth Part Remaining Issues", 3GPP DRAFT; R1-1814155_SUMMARY OF BWP REMAINING ISSUES_R6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 19 November 2018 (2018-11-19), XP051494611, Retrieved from the Internet: URL:http://www.3gpp.org/ftp/tsg%5Fran/WG1%5FRL1/TSGR1%5F95/Docs/R1%2D1814155%2Ezip [retrieved on 2018-11-19]
- ERICSSON: "BWP switching delay on due to BWP switching on multiple CCs", 3GPP DRAFT; R4-1912206, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Chongqing, China; 20191014 - 20191018 4 October 2019 (2019-10-04), XP051806937, Retrieved from the Internet: URL:https://ftp.3gpp.org/tsg_ran/WG4_Radio /TSGR4_92Bis/Docs/R4-1912206.zip R4-1912206.docx [retrieved on 2019-10-04]
- MEDIATEK INC: "Discussion on NR V2X interruption requirement", 3GPP DRAFT; R4-1913309, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Reno, Nevada, USA; 20191118 - 20191122 8 November 2019 (2019-11-08), XP051817927, Retrieved from the Internet: URL:https://ftp.3gpp.org/tsg_ran/WG4_Radio /TSGR4_93/Docs/R4-1913309.zip R4-1913309 Discussion on NR V2X interruption requirement.docx [retrieved on 2019-11-08]

**Description**

Technical field

This disclosure pertains to wireless communication technology, in particular to a method performed by a wireless device and a wireless device utilising configurable bandwidth parts.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the approaches disclosed herein may be applied to any other variant, wherever appropriate. Likewise, any advantage of any of the approaches may apply to any other approach, and vice versa. Other objectives, features, and advantages will be apparent from the following description.

Background

In some wireless communication systems, e.g. 3GPP New Radio systems, parts (e.g., referred to as Bandwidth Parts, BWPs) of an operating bandwidth (e.g., system or carrier or cell bandwidth) may be used in different configurations. Operating may require switching between bandwidth parts, which in turn might require re-tuning of radio circuitry. Such activities can lead to the circuitry being unavailable for normal operation.

The 3GPP RAN WG1 contribution R1-1812962 discloses that if the Bandwidth Part, BWP, inactivity timer of a User Equipment, UE, on a first cell expires during a BWP switching on a second cell, the UE can delay the active BWP switching triggered by the BWP inactivity timer expiration on the first cell until the completion of the ongoing BWP switching on the second cell.

Summary

The invention is defined in the independent claims. Embodiments of the invention are defined in the dependent claims.

The approaches described herein allow improved handling of scenarios when operating in a carrier aggregation or other scenario with multiple cells and/or component carriers (e.g., dual or multiple connectivity, like EN-DC scenarios).

There is disclosed a method performed by a wireless device, e.g. for performing active bandwidth part switching. The method comprises performing a first active bandwidth part switching on a first link for the wireless device. The method further comprises determining that a second active bandwidth part switching on a second link for the wireless device is to be performed while the first active bandwidth part switching is ongoing. The method also comprises adapting at least one of the first and second active bandwidth part switching based on a rule.

Active bandwidth part switching may comprise switching from one bandwidth part to another one, in particular switching the active BWP from one to another. For each link, there may be configured and/or defined and/or configurable a set on BWPs, wherein the set may comprise 2 or more, in particular 4 BWPs or more. At a given point in time, one or at least one of the BWP may be active. Active BWP switching may comprise switching the currently active BWP to another BWP. BWP switching may comprise tuning and/or re-tuning of circuitry, e.g. receiver circuitry and/or transceiver circuitry and/or transmitter circuitry, and/or switching from one set of control resources (e.g., CORESET and/or resources for transmitting uplink control information and/or resources for receiving downlink control information, and/or resources for transmitting and/or receiving sidelink control information, e.g. depending e.g. on type of link and/or communication direction). A link may correspond to a communication direction, e.g. uplink or downlink or sidelink. It may be considered that a link corresponds to a carrier and/or cell and/or bandwidth, e.g. a system and/or cell and/or operating bandwidth. A BWP may correspond to a frequency bandwidth inside and/or covering a carrier and/or system and/or cell and/or operating bandwidth. Different BWPs may correspond to the same or different bandwidths (e.g., in terms of frequency range covered and/or size of frequency range covered), and/or may differ in terms of associated control resources and/or numerology. Different links may be associated to the same or different devices (e.g., communication partners of a link) and/or communication directions and/or radio access technologies (for example, on link may be associated to LTE, and one to NR, e.g. in a dual connectivity and/or EN-DC scenario).

Determining that a second active bandwidth part switching on a second link for the wireless device is to be performed may be based on receiving and/or decoding signaling indicating the second active BWP switching is to be performed, e.g. based in control signaling on a physical layer, e.g. a DCI, and/or higher layer signaling like RRC signaling and/or MAC signaling. In some cases, determining that a second active BWP switching is to be performed may be based on a timer, e.g. a timer that has run out and/or indicates a timing threshold having been reached, in particular an inactivity timer (which may for example indicate that no data and/or control signaling has been received (e.g., in DL or SL) or transmitted (e.g., in UL or SL) for a predetermined time (e.g., a threshold time), which may be predefined and/or configured and/or configurable. Determining that an active bandwidth part switching is to be performed may correspond to triggering the active BWP switching.

To an active BWP switching there may be associated a time period or interval, e.g. a switching time period. Such a period or interval may for example indicate a maximum time interval or duration for the switch, e.g. defined by a standard and/or configured or configurable, and/or an actual and/or estimated time for the switch. The switching time period may cover the time for retuning and/or re-configuring for the new active BWP. To different links and/or BWP may be associated different switching time periods.

In general, the first active bandwidth part switching may be based on and/or determined based on and/or triggered based on and/or by a timer, and/or the second active bandwidth part switching to be performed may be based on and/or determined based on and/or triggered based on and/or by a timer.

The approaches described herein allow improved handling of BWP switching in scenarios in which a wireless device operates with two or more links. In particular, undefined behaviour and/or undesired blocking of BWPs may be avoided or ameliorated.

It may be considered that each of the first and second links may be one of an uplink from the wireless device to a base station, an downlink from a base station to the wireless device, and a sidelink between the wireless device and another wireless device. Thus, the approaches may be implemented for different types of communication setups.

It may generally be considered that the rule may be predefined in the wireless device, or configured or configurable by one or more base stations. Accordingly, different operation conditions may be accommodated.

Alternatively, or additionally, the adapting the at least one of the first and second active bandwidth part switching based on the rule may comprise: postponing the second active bandwidth part switching by a (e.g., postponing) time period. The postponing time period may correspond to a leftover time for the first active BWP switching and/or indicate a starting time (and/or earliest starting time) for the second active bandwidth part switch, in particular such that the starting time (and/or earliest starting time) is coincides with the end of the switching time period of the first active BWP switching, and/or is later than the end of the switching time period of the first active BWP switching. The postponing may be performed during the ongoing first active BWP switching.

Alternatively, or additionally, it may be considered that the adapting the at least one of the first and second active bandwidth part switching based on the rule may comprises discarding the second active bandwidth part switching while maintaining the first active bandwidth part switching intact. Thus, the triggered second BWP switching may be om itted.

Alternatively, or additionally, in some variants, the adapting the at least one of the first and second active bandwidth part switching based on the rule may comprise:

restarting the first active bandwidth part switching; and extending a duration (e.g., switching time period) of the second active bandwidth part switching. The restarting may be with the original switching time period, or with an adapted switching time period, e.g. an extended switching time period. Thus, in particular for the second active BWP switching, allowances can be made for additional processing that may be needed.

Alternatively, or additionally, it may be considered the adapting the at least one of the first and second active bandwidth part switching based on the rule may comprise:

extending a duration (e.g., switching time period) of the first active bandwidth part switching by a (e.g., extending) time period based on a number of ongoing (and/or determined and/or triggered) active bandwidth part switching activities on one or more of the first and second links. Thus, in particular for the first active BWP switching, allowances can be made for additional processing that may be needed for one or more additionally triggered BWP switches.

Alternatively, or additionally, in some variants, the adapting the at least one of the first and second active bandwidth part switching based on the rule may comprise prioritizing the first and second active bandwidth part switching based on priority levels mapped to the first and second active bandwidth part switching, wherein the priority levels may be determined based on characteristics of the first and second links. Prioritizing the first and second switching may in general comprise prioritizing one of the first and second switching over the other, e.g. based on the priority levels. For example, a lower prioritized switching may be omitted, and/or postponed and/or performed with extended switching time period. Thus, optimised operation may be facilitated.

Alternatively, or additionally, it may be considered that the wireless device may be capable (and/or have the capability) of performing multiple active bandwidth part switching in parallel, and the adapting the at least one of the first and second active bandwidth part switching based on the rule may comprises: receiving an indication from one or more base stations; and performing first and second active bandwidth part switching at least partially overlapping in time based on the indication. The wireless device may indicate the capability to the one or more base station, e.g. with capability signaling. Accordingly, the network may provide flexible operation adapted to wireless device capability.

Alternatively, or additionally, in some variants, the adapting the at least one of the first and second active bandwidth part switching based on the rule may comprise:

prioritizing the first and second active bandwidth part switching based on coverage modes of operations on bandwidth parts on the first and second links. Coverage modes may for example pertain to, and/or be indicated by a configuration and/or cell size and/or number of repetitions for signaling, e.g. for control signaling and/or data signaling. Thus, the approaches may be optimized in particular for eMTC and/or IoT and/or narrowband operation.

Alternatively, or additionally, it may be considered that the adapting the at least one of the first and second active bandwidth part switching based on the rule may comprise prioritizing the first and second active bandwidth part switching based on an operational mode of the wireless device, wherein the operational modes comprise of a set including include in-coverage, partial coverage, and out-of-network coverage. Accordingly, in particular movement and/or changing operation conditions may be accommodated.

Alternatively, or additionally, in some variants, the adapting the at least one of the first and second active bandwidth part switching based on the rule may comprise:

prioritizing the first and second active bandwidth part switching based on characteristics of signals being transmitted (and/or received) on the first and second links at the same time as the first and second active bandwidth part switching. Such signals may for example be and/or comprise reference signaling and/or data signaling and/or control signaling.

Alternatively, or additionally, it may be considered that the adapting the at least one of the first and second active bandwidth part switching based on the rule may comprise: prioritizing the first and second active bandwidth part switching based on types of bandwidth part switch of the first and second active bandwidth part switching, wherein the types of bandwidth part switch comprise of a set including timer-based, DCI-based, and RRC-based BWP switch. Thus, for different triggers, different operations and/or prioritizations may be performed, and/or operation conditions may be accommodated. For example, a timer-based switch may indicate low utilization of the BWP and/or the associated cell or carrier, with low prioritisation and/or possible relaxed timing constraints; a DCI triggered switch may indicate more urgent constraints, and/or higher utilization.

Alternatively, or additionally, it may be considered that the adapting the at least one of the first and second active bandwidth part switching based on the rule may comprise: delaying at least one of the first and second active bandwidth part switching based on resource consumption of the at least one of the first and second active bandwidth part switching. Resource consumption may in particular refer to consumption of time and/or power. Delaying may comprise extending a switching time period; and/or shifting the starting time to a later time. Thus, the BWP switching may be performed efficiently, in particular with low and/or spread out resource consumption.

A wireless device for a wireless communication network may be considered. The wireless device comprises processing circuitry configured to perform a as described herein. The wireless device may comprise power supply circuitry configured to supply power to the wireless device, and/or radio circuitry for transmitting and/or receiving and/or performing a BWP switch.

There is also described a program product comprising instructions causing processing circuitry to control and/or perform a method as described herein. Moreover, a carrier medium arrangement carrying and/or storing a program product as described herein is considered.

Brief description of the drawings

The drawings are provided to illustrate concepts and approaches described herein, and are not intended to limit their scope. The drawings comprise:

Figures 1A and 1B, showing exemplary communication setups;

Figure 2, showing an exemplary scenario of BWP switching;

Figure 3, showing an exemplary communication scenario;

Figure 4, showing an exemplary BWP switch scenario;

Figure 5, showing another exemplary BWP switch scenario;

Figure 6, showing another exemplary communication scenario;

Figure 7, showing a flow diagram of an exemplary method of BWP switching;

Figures 8A and 8B, showing exemplary resource structures;

Figure 9, showing an exemplary communication setup;

Figure 10, showing an exemplary node;

Figure 11, showing an exemplary node;

Figure 12, showing an exemplary communication setup;

Figure 13, showing an exemplary communication setup;

Figure 14, showing a flow diagram of an exemplary communication method;

Figure 15, showing a flow diagram of an exemplary communication method;

Figure 16, showing a flow diagram of an exemplary communication method; and

Figure 17, showing a flow diagram of an exemplary communication method.

Detailed description

V2X is a special type of device to device (D2D) operation. The D2D operation is a generic term which may comprise transmission and/or reception of any type of D2D signals (e.g. physical signals, physical channel, etc.) by a D2D communication capable UE and/or by D2D discovery capable UE. D2D operation is therefore also called as D2D transmission, D2D reception, D2D communication, proximity services (ProSe), V2X, etc.

V2X communication includes any combination of direct communication between vehicles, pedestrians and infrastructure. Therefore, X may denote 'vehicular' (aka V2V) or X may denote 'pedestrian' (aka V2P) or X may denote 'infrastructure' (aka V2I) and so on. The variants described herein are applicable for any type of D2D operation including ProSe, V2X and so on.

V2X communication takes place on radio resources on sidelink (SL). The SL can be configured on a dedicated carrier (e.g. in a carrier of ITS band) or a carrier of the serving cell of the UE. In the latter case the SL resources and resources for cellular communication (over Uu link) are shared in time and/or frequency. Typically, the SL resources are time multiplexed with the uplink resources used for cellular communication on the serving cell of the UE.

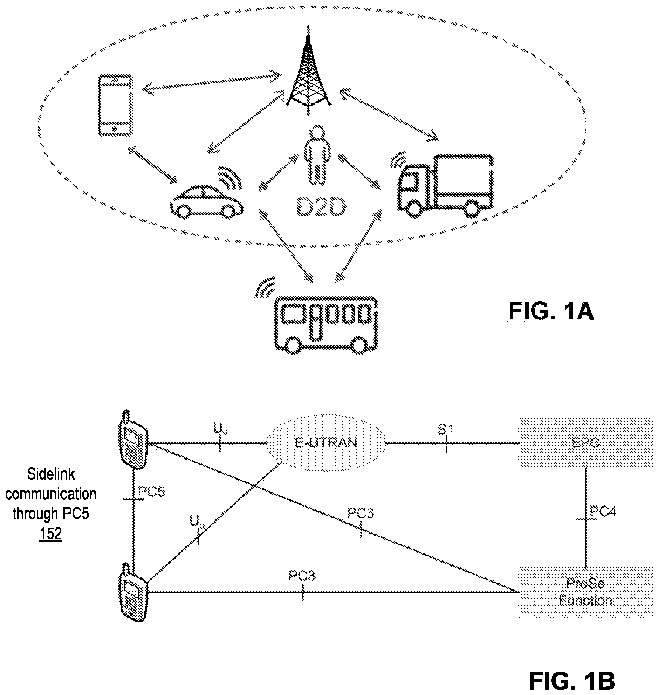

**Figure 1A** shows a device-to-device (D2D) system in a wireless network. V2X communications may carry both non-safety and safety information, where each of the applications and services may be associated with specific requirements sets, e.g., in terms of latency, reliability, capacity, etc.

**Figure 1B** shows various interfaces supporting V2X communications. For example, V2V (vehicle-to-vehicle) covers LTE-based communication between vehicles, either via Uu or sidelink. The Uu interface (and link) exists between a UE and a radio access network (RAN), and it's also referred to as an air interface. The Uu communication includes uplink and downlink communications. The sidelink communication through PC5 is at reference 152. V2P (vehicle-to-pedestrian) covers LTE-based communication between a vehicle and a device carried by an individual (e.g. handheld terminal carried by a pedestrian, cyclist, driver or passenger), either via Uu or sidelink (PC5). V2I/N (vehicle-to-infrastructure/network) covers LTE-based communication between a vehicle and a roadside unit/network. A roadside unit (RSU) is a transportation infrastructure entity (e.g. an entity transmitting speed notifications) that communicates with V2X capable UEs over sidelink (PC5). For V2N, the communication is performed on Uu.

In New Radio (NR), which is based on OFDM, multiple numerologies are supported for operation e.g. transmission and/or reception of signals. The term numerology may characterize any one or more of: frame duration, subframe or TTI duration, slot duration, minslot duration, symbol durations subcarrier spacing, number of resource blocks (RBs) within the bandwidth, number of subcarriers per physical channel (e.g. per RB), cyclic prefix (CP) length (e.g. normal and extended CP lengths), etc. A scaling approach (based on a scaling factor 2N, N=1, 2, ...) is considered for deriving subcarrier spacings for NR: 15kHz, 30 kHz, 60 kHz, 120 kHz, 240 kHz, etc. The numerology-specific time resource durations (e.g. slot, subframe, etc.) can then be determined based on the subcarrier spacing: subcarrier spacing of (2N*15) kHz corresponds to a symbol duration of 1/(15000*2N) second.

Furthermore, NR supports large number of bandwidths, which depends on the frequency range of signals transmitted in the cell. Examples of frequency ranges are frequency range 1 (FR1) and frequency range 2 (FR2). In FR1, the frequencies are lower than the frequencies belonging to FR2. An example of FR1 comprises a range of frequencies up to 7 GHz. An example of FR2 comprises a range of frequencies between 24 and 52.6 GHz. In FR1, examples of supported (e.g., carrier or system or cell) bandwidths are 5 MHz, 10 MHz, 20 MHz, 30 MHz, 40 MHz, 50 MHz, 80 MHz, 100 MHz, etc. In FR2, examples of supported bandwidths are 50 MHz, 100 MHz, 200 MHz, 400 MHz, etc.

In NR the cell bandwidth can be very large (e.g. 100 MHz in FR1 and 400 MHz in FR2). The UE may not be scheduled over the entire cell BW, but if the UE is tuned over the entire serving cell BW, the UE power consumption will increase. The UE will also receive interference over the part of BW where the UE is not scheduled. To enable the UE power saving and avoid interference, the UE can be configured by the higher layer with a set of bandwidth parts (BWPs) for receptions by the UE (DL BWP set, e.g., up to 4 DL BWPs)) and a set of BWPs for transmissions by the UE (UL BWP set, e.g., up to 4 UL BWPs). BWP is also defined for the SL, e.g., SL BWP. The same SL BWP is used for transmission and reception. Each BWP (also called as carrier bandwidth part) is a contiguous set of physical resource blocks selected from a contiguous subset of the common resource blocks for a given numerology(u) on a given carrier.

Each BWP can be associated multiple parameters. Examples of such parameters are: BW (e.g. number of time-frequency resources (e.g. resource blocks such as 25 PRBs), location of BWP in frequency (e.g. starting resource block (RB) index of BWP), subcarrier spacing (SCS), cyclic prefix, any other baseband parameter (e.g. MIMO layer, receivers, transmitters, HARQ related parameters), etc.

The UE is served (e.g. receive and transmits signals) only on the active BWP(s). At least one of the configured DL BWPs can be active, at least one of the configured UL BWPs can be active, and at least one SL BWP can be active. The UE can be configured to switch the active BWP based on a timer (e.g. BWP inactivity timer), by receiving a command or a message from another node (e.g. from the BS), etc. Examples of command or messages are DL control information (DCI) sent on PDCCH, RRC message, MAC, etc. Any active BWP can be switched independently e.g. UL, DL, and SL active BWPs can be switched separately. The active BWP switching operation may involve changes in one or more parameters associated with the BWP (described above e.g. BW, frequency, location, etc.). For example, when the timer expires, a UE is required to switch its current active BWP to one of the configured BWPs. In another example when the UE receives DCI command to switch active BWP then the UE is required to switch its current active BWP to one of the configured BWPs indicated in the command. In yet another example, when the UE receives RRC message to switch active BWP, the UE is required to switch its current active BWP to new BWP indicated in the RRC message; this may also be called as reconfiguration of the active BWP. The switching may also comprise whereby the UE is first time configured with an active BWP, e.g. when enters in RRC connected state.

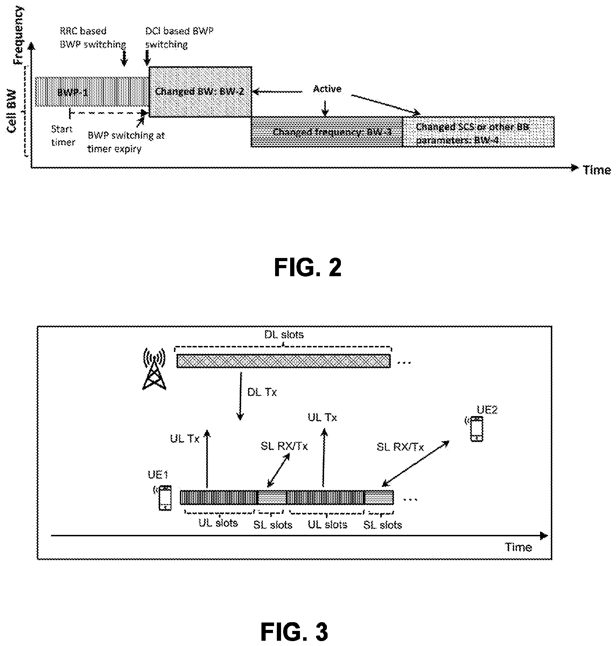

An example of the active BWP switching is illustrated in **Figure** 2. For example, the UE is configured with 4 different BWPs: BWP-1, BWP-2, BWP-3 and BWP-4, which are associated with different set of parameters. The UE can be configured to switch BWP based on any of timer, DCI command or RRC message (which also includes a long RRC procedure delay e.g. 10 milliseconds). For example, the UE is switched first from the current active BWP-1 to new BWP-2, which becomes new active BWP. The active BWP-2 is further switched to BWP-3, which in turn becomes new active BWP. The active BWP-3 is then further switched to BWP-4, which in turn becomes new active BWP.

There currently exist certain challenge(s). The active BWP on SL for V2X and the active BWPs on Uu link (e.g. DL BWP and/or UL BWP) are independently managed by the network, e.g., configured or switched between old and new BWPs. In the existing solutions, there is no rule that specifies the UE behavior for the scenario in which the active BWP on SL and the active BWP on Uu link (e.g. DL or UL BWP) are concurrently switched e.g. over partially or fully overlapping time. There is risk that under this scenario the UE may discard operations on both SL and Uu. Due to lack of UE behavior and rules, the resources allocated / scheduled on Uu and SL can be wasted.

Certain aspects of the present disclosure and their variants may provide solutions to these or other challenges. The scenario comprises a UE configured with cellular operation on the Uu interface and is also configured with sidelink (SL) operation (e.g. for V2X operation) on the same serving cell (cell1).

The UE can be configured to switch its active BWP on SL and can also be configured to switch at least one of an active DL BWP and an active UL BWP on the Uu interface. There are, proposed herein, various variants which address one or more of the issues disclosed herein. According to a first approach, the switching of the active BWPs on at least two different links (e.g. on SL and DL, or SL and UL, or UL and DL) over at least partially overlapping time impact the active BWP switching procedure on at least one of the links involved in the switching. For example, during the active BWP switching operation on one link (e.g. first link (L1)), if the UE is configured to also perform an active BWP switching operation on at least one another link (e.g. second link (L2)) then the UE adapts the ongoing active BWP switching operation on L1 and/or the active BWP switching operation on L2. The adaptation is based on one or more rules, which can be pre-defined or configured by a network node. Examples of rules are: extending the durations of active BWP switching operation on both L1 and L2, not extending the duration of active BWP switching operation on L1 while discarding or postponing the active BWP switching operation on L2, UE delaying active BWP switching on DL and/or on UL to prevent loss of SL resources (especially if occur infrequently).

Certain variants may provide one or more of the following technical advantage(s): (1) The UE behavior is well defined regardless of whether the active SL BWP and active BWP on any one or both links on Uu (UL and/or DL) are switched during disjoint time periods or during overlapping time periods; (2) the radio resources are more efficiently used on SL and on the links on Uu interface; and (3) the well-defined UE behavior enables the network node (e.g. serving BS) to adapt the switching of active BWPs on different radio links to avoid or at least minimize the wastage of radio resources.

Some of the variants contemplated herein will now be described more fully with reference to the accompanying drawings. Other variants, however, are contained within the scope of the subject matter disclosed herein, the disclosed subject matter should not be construed as limited to only the variants set forth herein; rather, these variants are provided by way of example to convey the scope of the subject matter to those skilled in the art.

References in the specification to "one variant," "a variant," "an example variant," and so forth, indicate that the variant described may include a particular feature, structure, or characteristic, but every variant may not necessarily include the particular feature, structure, or characteristic. Moreover, such phrases are not necessarily referring to the same variant. Further, when a particular feature, structure, or characteristic is described in connection with a variant, it is submitted that it is within the knowledge of one skilled in the art to affect such feature, structure, or characteristic in connection with other variants whether or not explicitly described.

The following description and claims may use the terms "coupled" and "connected," along with their derivatives. These terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other. A "set," as used herein refers to any positive whole number of items including one item.

The term node is used which can be a network node or a UE. Examples of network nodes are NodeB, base station (BS), multi-standard radio (MSR) radio node such as MSR BS, eNodeB, gNodeB. MeNB, SeNB, integrated access backhaul (IAB) node, network controller, radio network controller (RNC), base station controller (BSC), relay, donor node controlling relay, base transceiver station (BTS), Central Unit (e.g. in a gNB), Distributed Unit (e.g. in a gNB), Baseband Unit, Centralized Baseband, C-RAN, access point (AP), transmission points, transmission nodes, RRU, RRH, nodes in distributed antenna system (DAS), core network node (e.g. MSC, MME, etc), O&M, OSS, SON, positioning node (e.g. E-SMLC), etc.

Another example of a node is user equipment (UE), which is a non-limiting term and refers to any type of wireless device communicating with a network node and/or with another UE in a cellular or mobile communication system. Examples of UE are target device, device to device (D2D) UE, vehicular to vehicular (V2V), machine type UE, MTC UE or UE capable of machine to machine (M2M) communication, PDA, Tablet, mobile terminals, smart phone, laptop embedded equipment (LEE), laptop mounted equipment (LME), USB dongles, etc.

In some variants, generic terminology, such as "radio network node" or simply "network node (NW node)," is used. It can be any kind of network node which may comprise base station, radio base station, base transceiver station, base station controller, network controller, evolved Node B (eNB), Node B, gNodeB (gNB), relay node, access point, radio access point, Remote Radio Unit (RRU), Remote Radio Head (RRH), Central Unit (e.g. in a gNB), Distributed Unit (e.g. in a gNB), Baseband Unit, Centralized Baseband, C-RAN, access point (AP), etc.

A node comprises an electronic device. An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, solid state drives, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors (e.g., of which a processor is a microprocessor, controller, microcontroller, central processing unit, digital signal processor, application specific integrated circuit (ASIC), field programmable gate array (FPGA), other electronic circuitry, a combination of one or more of the preceding) coupled to one or more machine-readable storage media to store code for execution on the set of processors and/or to store data. For instance, an electronic device may include non-volatile memory containing the code since the non-volatile memory can persist code/data even when the electronic device is turned off (when power is removed). When the electronic device is turned on, that part of the code that is to be executed by the processor(s) of the electronic device is typically copied from the slower non-volatile memory into volatile memory (e.g., dynamic random-access memory (DRAM), static random-access memory (SRAM)) of the electronic device. Typical electronic devices also include a set of one or more physical network interface(s) (NI(s)) to establish network connections (to transmit and/or receive code and/or data using propagating signals) with other electronic devices. For example, the set of physical NIs (or the set of physical NI(s) in combination with the set of processors executing code) may perform any formatting, coding, or translating to allow the electronic device to send and receive data whether over a wired and/or a wireless connection. In some variants, a physical NI may comprise radio circuitry capable of (1) receiving data from other electronic devices over a wireless connection and/or (2) sending data out to other devices through a wireless connection. This radio circuitry may include transmitter(s), receiver(s), and/or transceiver(s) suitable for radiofrequency communication. The radio circuitry may convert digital data into a radio signal having the proper parameters (e.g., frequency, timing, channel, bandwidth, and so forth). The radio signal may then be transmitted through antennas to the appropriate recipient(s). In some variants, the set of physical NI(s) may comprise network interface controller(s) (NICs), also known as a network interface card, network adapter, or local area network (LAN) adapter. The NIC(s) may facilitate in connecting the electronic device to other electronic devices allowing them to communicate with wire through plugging in a cable to a physical port connected to a NIC. One or more parts of a variant may be implemented using different combinations of software, firmware, and/or hardware.

The term radio access technology, or RAT, may refer to any RAT e.g. UTRA, E-UTRA, narrow band internet of things (NB-IoT), WiFi, Bluetooth, next generation RAT, New Radio (NR), 4G, 5G, etc. Any of the equipment denoted by the terms of node, network node, or radio network node, may be capable of supporting a single or multiple RATs.

The term signal used herein can be any physical signal or physical channel. Examples of physical signals are reference signal such as PSS, SSS, CSI-RS, DMRS, signals in SSB, CRS, PRS, SRS, etc. The term physical channel used herein is also called as 'channel', which contains higher layer information. Examples of physical channels are MIB, PBCH, NPBCH, PDCCH, PDSCH, sPUCCH, sPDSCH, sPUSCH, MPDCCH, NPDCCH, NPDSCH, E-PDCCH, PUSCH, PUCCH, NPUSCH, etc.

The term time resource used herein may correspond to any type of physical resource or radio resource expressed in terms of length of time. Examples of time resources are: symbol, time slot, subframe, radio frame, TTI, interleaving time, etc. The term TTI used herein may correspond to any time period (T0) over which a physical channel can be encoded and optionally interleaved for transmission. The physical channel is decoded by the receiver over the same time period (T0) over which it was encoded. The TTI may also interchangeably called as short TTI (sTTI), transmission time, slot, sub-slot, mini-slot, mini-subframe, etc.

The term time-frequency resource used herein for any radio resource defined in any time-frequency resource grid in a cell. Examples of time-frequency resource are resource block, subcarrier, resource block (RB), etc. The RB may also be interchangeably called as physical RB (PRB), virtual RB (VRB), etc.

The term link or radio link used herein may correspond to a link used for cellular operation or for any type of D2D operation. Examples of links used for cellular operations are links on Uu interface, uplink (UE transmission to BS), downlink (BS transmission to UE), forward link (BS transmission to UE), reverse link (UE transmission to BS). Examples of links used for D2D operations are links on PC5, sidelink (from one UE to another UE e.g. SL for V2X).

The term multi-carrier operation used herein can be either a carrier aggregation (CA) or multi-connectivity (MuC) operation. Dual-connectivity (DC) is special case of MuC operation comprises only two cell groups.

In CA the UE is configured with two or more carriers and the UE can have multiple serving cells. The term 'serving cell' herein means that the UE is configured with the corresponding serving cell and may receive from and/or transmit data to the network node on the serving cell e.g. on PCell or any of the SCells. The data is transmitted or received via physical channels, e.g., PDSCH in DL, PUSCH in UL, etc. A component carrier (CC) also interchangeably called as carrier or aggregated carrier, PCC or SCC is configured at the UE by the network node using higher layer signaling e.g. by sending RRC configuration message to the UE. The configured CC is used by the network node for serving the UE on the serving cell (e.g. on primary cell (PCell), primary Scell (SCell), secondary cell (SCell), etc.) of the configured CC. The configured CC is also used by the UE for performing one or more radio measurements (e.g. RSRP, RSRQ, etc.) on the cells operating on the CC e.g. PCell, SCell or PSCell and neighboring cells.

The term dual connectivity used herein may refer to the operation mode wherein the UE is configured with two cell groups (CG). Each CG is served or managed by a network node (e.g. gNB, eNB, etc.). Therefore, DC involves two network nodes. For example, the two network nodes are as called master node (MN) (e.g. master eNB (MeNB), master gNB (MgNB), etc.) and secondary node (SN) (e.g. secondary eNB (SeNB), secondary gNB (SgNB), etc.). More generally in multiple connectivity (or multi-connectivity) operation the UE can be served by two or more nodes e.g. MeNB, SeNB1, SeNB2 and so on. The UE is configured with PCC from both MN and SN. As an example, the main serving cells from MN and SN are called as PCell and PSCell respectively. The main serving cells (PCell and PSCell) may also be called as special cell (SpCell) or special serving cell. The PCell and PSCell operate the UE typically independently. The UE is also configured with one or more SCCs from each node involved in multi-connectively, e.g., one or more SCells from MN and SN. The corresponding secondary serving cells served by MN and SN are called SCell. The UE in DC typically has separate TX/RX for each of the connections with MN and SN. This allows the MN and SN to independently configure the UE with one or more procedures e.g. radio link monitoring (RLM), DRX cycle, etc., on their respective PCell and PSCell. The above definitions also include dual connectivity (DC) operation, which is performed based on corresponding CA configurations. In NR, there are different variants of multi-connectively e.g. EN-DC, NE-DC, NR-NR SC, etc. In EN-DC, the MN contains LTE serving cells with at least LTE PCell and the SN contains NR serving cells with at least NR PSCell. In NE-DC, the MN contains NR serving cells with at least NR PCell and the SN contains LTE serving cells with at least LTE PSCell. In NR-NR DC (NN-DC), the MN contains NR serving cells with at least NR PCell and the SN also contains NR serving cells with at least NR PSCell. The variants are applicable for any type or variant of multi-connectivity operation in NR, LTE or any other RAT or combination of different RATs. In this disclosure, all methods that are described for CA operation are equally applicable to DC operation, unless stated otherwise.

The term bandwidth (BW) used herein is range of frequencies over which a node transmits to and/or receives signal from another node. The BW is interchangeably called as operating bandwidth, channel bandwidth, system bandwidth, configured bandwidth, transmission bandwidth, cell bandwidth, cell transmission BW, carrier bandwidth, Bandwidth part (BWP), active BWP, configured UE bandwidth, etc. The BWP refers to part of the bandwidth over which the UE is configured to receive and/or transmit signals. The BWP can be equal to smaller than the cell BW. The BW can be expressed in any one of the following: Z1 Hz (e.g. 20 MHz), in terms of number of physical channels (e.g. Z1 resource blocks, Z3 subcarriers, etc.). In one example the BW can include guard band while in another example the BW can exclude guard band. For example, system or channel BW can include guard band while transmission bandwidth consists of BW without guard band. For simplicity, the term BW is used in the variants.

A scenario for active BWP switching on different links may be considered. The scenario comprises at least two active BWPs: a first active BWP (BWP11) configured for operation on a first link (L1) and a second active BWP (BWP21) configured for operation on a second link (L2). Examples of L1 and L2 are UL and DL respectively or vice versa. Another set of examples of L1 and L2 are UL and SL respectively or vice versa. Yet another set of examples of L1 and L2 are DL and SL respectively or vice versa. In some variants L1 and L2 are the same link (e.g., DL, or UL, or SL) and in this case BWP11 and BWP21 are two active BWPs on the same link (e.g. two active BWPs on DL). In one example the links, L1 and L2 belong to the same serving cell (cell1) of the UE. In another example the links, L1 and L2 belong to different serving cells (e.g. L1 and L2 to cell1 and cell2 respectively) of the UE. Examples of cell1 and cell2 are PCell and SCell or SCell1 and SCell2 respectively in CA. Other examples of cell1 and cell2 are PCell and PSCell or SCell1 and SCell2 respectively in DC.

BWP11 can be switched to another active BWP (BWP12) on L1. Similarly, BWP21 can also be switched to another active BWP (BWP22) on L2. The switching of BWP11 and BWP21 can be performed over non-overlapping time periods or over overlapping time periods or partially overlapping time periods.

In some variant the scenario may further comprise a third active BWP (BWP31) configured for operation on a third link (L3). BWP31 can also be switched to another active BWP (BWP32) on L3. Examples of L1, L2 and L3 are DL, UL, and SL respectively. The switching of BWP11, BWP21 and BWP31 can be performed over non-overlapping time periods or over overlapping time periods or partially overlapping time periods. In one example the links, L1, L2 and L3 belong to the same serving cell (cell1) of the UE. In another example the links, L1, L2 and L3 belong to different serving cells (e.g., L1, L2 and L3 to cell 1 , cell2, and cell3 respectively) of the UE. Examples of cell1, cell2, and cell3 are PCell, SCell1, and SCell2 or SCell1, SCell2, and SCell3 respectively in CA. Other examples of cell 1 , cell2, and cell3 are PCell, PSCell, and SCell, or PSCell, SCell1, and SCell2, respectively in DC, and so on.

An example of UL, SL, and DL in the serving cell (cell1) of the UE (e.g. UE1) is shown in **Figure** 3. As an example, L1, L2, and L3 may correspond to UL, SL, and DL respectively. In this example, the SL and UL resources are time multiplexed and are repeated with some pattern, which is configured in cell1, e.g., by the network node serving or managing cell1. The UE1 and UE2 uses the SL resources to communicate (reception (Rx) and transmission (Tx)) with each other in half duplex manner. The DL and UL/SL can be on the same carrier frequency (e.g. in TDD) or they can be on different carrier frequencies (e.g. in FDD such as DL on DL carrier of cell1 and, both UL and SL on UL carrier of cell1). The active BWP switching may interchangeably be called as changing or modification or reconfiguration or configuration of the active BWP or even BWP switching. Another example comprises L1, L2 and L3 as DL1, DL2 and DL3 of cell1, cell2 and cell3 respectively. Yet another example comprises L1, L2, and L3 as UL1, UL2, and UL3 of cell1, cell2, and cell3 respectively. Yet another example comprises L1, L2, and L3 as DL1, DL2, and SL of cell1, cell2, and cell3 respectively.

Adapting concurrent active BWP switching on multiple links is described. According to a first variant, the UE is configured to switch its first active BWP (BWP11) on the first link, L1, to another active BWP (BWP12) on the same link, L1. If the UE has to switch the active BWP only on L1 then the switching action can be performed by the UE over a first time period, T1, which may be called as the active BWP delay for switching from BWP11 to BWP12 on L1.

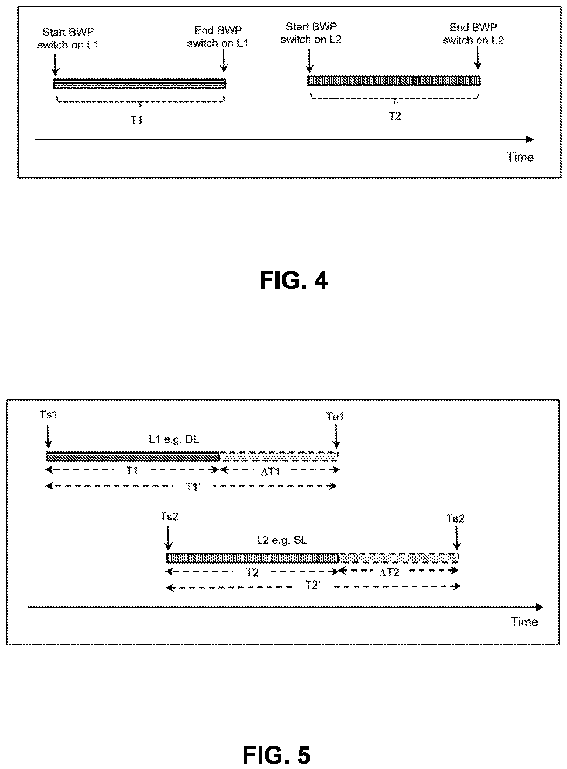

The UE can perform the active BWP switching from the second active BWP (BWP21) on the second link (L2) to another active BWP (BWP22) on L2 over a second time period, T2, provided that the UE has to switch the active BWP only on L2. More specifically, the UE can satisfy T1 and T2, provided that the active BWP switching on L1 and L2 are performed over non-overlapping time periods, e.g., in series or tandem manner. An example is shown in **Figure 4,** where for example the UE is configured to perform the active BWP switching on L1 and L2 (e.g. on UL and SL, or on DL and SL) such that the two actions are performed over non-overlapping times. The example applies to any number of links e.g. L1, L2 and L3.

The UE can also perform the active BWP switching from the third active BWP (BWP31) on the third link (L3) to another active BWP (BWP32) on L3 over a third time period, T3, provided that the UE has to switch the active BWP only on L3. The values of T1, T2, and T3 may depend on the type of triggering mechanism configured for the active BWP switching, e.g., timer based, DCI based, or RRC based triggering. The values of T1, T2, and T3 may further depend on the numerology of the active BWPs involved in switching e.g. SCS, slot length, symbol length, CP length, etc. In one example, any two or more of: T1, T2, and T3 are the same, while T1, T2 and T3 can be different in another example.

However, we consider a scenario where the active BWP switching on L1 and L2 at least partially overlap in time. For example: while the active BWP switching from BWP11 to BWP12 is being performed by the UE on L1, the UE is further configured to perform active BWP switching from BWP21 to BWP22 on L2. This scenario may also be called as concurrent active BWP switching, or at least partially time-overlapping active BWP switching.

According to one aspect of this variant, the UE is configured to adapt at least one of: the first delay or time period (T1) for performing active BWP switching on L1 and the second delay or time period (T2) for performing active BWP switching on L2. For example, T1 can be adapted to T1' and/or T2 can be adapted to T2', where T1' > T1 and T2' > T2. An example is shown in **Figure 5,** where for example the UE is configured to perform the active BWP switching on L1 and L2 (e.g. on DL and SL, or on UL and SL) such that the two actions are performed over at least partially overlapping times. Ts1 and Te1 are the starting time and ending time respectively of active BWP switching on L1. Ts2 and Te2 are the starting time and ending time respectively of active BWP switching on L2. In this example, the active BWP switching on L2 is configured (or starts in the UE) while the active BWP switching on L2 is already ongoing. According to a general principle of this variant, the basic active BWP switching times T1 and T2 (on L1 and L2 respectively) are adapted to T1' and T2' respectively. The amount of the adaptation of their respective active BWP switching delays (e.g. $\Delta T1$ and $\Delta T2$ on L1 and L2 respectively) depends on specific rules, which are described in the following sections with several examples. This example can be extended to any number of links e.g. L1, L2 and L3.

The adaptation of T1 to T1' and/or T2 to T2' is determined by the UE based on one or more rules. The rules can be pre-defined and/or configured at the UE by another node (e.g. by the network node). Examples of such rules are described below.

According to a first example, while the active BWP switching from BWP11 to BWP12 is being performed by the UE on L1 and during this time if the UE is further configured to perform active BWP switching from BWP21 to BWP22 on L2, then the UE will postpone the starting of the active BWP switching on L2. In this case the UE will continue performing and complete the ongoing active BWP switching action on L1 within T1. But the active BWP on L2 will be performed over time period T2' (instead of T2) starting from the moment the active BWP switching is triggered on L2. In one example, the UE postpones the active BWP switching on L2 by a certain time period ($\Delta T2$). For example, T2' = T2 + $\Delta T2$. Examples of $\Delta T2$ are (1) T1, (2) remaining time ($\Delta T1$) to complete the ongoing active BWP switching on L1 from the moment the active BWP switching is triggered on L2, (3) pre-defined value, at least $\Delta T1 + \delta T2$ (where $\delta T2$ is time margin), etc.

According to a second example, while the active BWP switching from BWP11 to BWP12 is being performed by the UE on L1 and during this time if the UE is further configured to perform active BWP switching from BWP21 to BWP22 on L2, then the UE will discard the active BWP switching from BWP21 to BWP22 on L2. In this case the UE will perform active BWP switching from BWP11 to BWP12 within T1. But the active BWP switching from BWP21 to BWP22 on L2 will be abandoned or discarded. In this case the UE may continue operating (transmitting and/or receiving) signals on L2 using the old active BWP (BWP21) in one variant. In another variant, the UE may stop operating (transmitting and/or receiving) signals on L2.

According to a third example, while the active BWP switching from BWP11 to BWP12 is being performed by the UE on L1 and during this time if the UE is further configured to perform active BWP switching from BWP21 to BWP22 on L2, then the UE will restart the ongoing active BWP switching on L1. In this case the time to perform active BWP switching on L1 is extended from T1 to T1'. The active BWP switching operation from BWP21 to BWP22 on L2 will continue. However, in this case in one example the active BWP switching on L2 is also extended from T2 to T2'. In another example the active BWP switching on L2 is performed within T2 depending on the value of $\Delta T$ where T1' = T1 + $\Delta T$. For example, if $\Delta T$ is larger than certain threshold then the UE can allocate more resources for switching on L2 to complete it within the original time period (T2). For example, this rule can be used for completing more urgent active BWP switching (e.g. on SL) when there is another ongoing active BWP switching (e.g. on DL).

According to the main embodiment of the invention, while the active BWP switching from BWP11 to BWP12 is being performed by the UE on L1 and during this time if the UE is further configured to perform active BWP switching from BWP21 to BWP22 on L2, then the UE will complete the ongoing active BWP switching on L1 and will also perform the active BWP switching on L2. In this case the time to perform active BWP switching on L1 is extended from T1 to T', and on L2 is extended from T2 to T2'. In one example: T1' = 2×T1 and T2' = 2×T2. In general, as an example, the UE may scale the delay to complete the ongoing active BWP switching on a link (e.g. on L1) with a scaling parameter (S(n)) which depends on the number (n) of other active BWP switching actions performed by the UE during the ongoing active BWP switching on that link (e.g. L1). For example, assume that while active BWP switching is being done on L1, the UE is also configured to perform n active BWP switching on the other links (e.g. all on the same or on different links or combination thereof) then T1 is extended to T', which can be expressed by the following general expression:

$$T1' = f(T1, S(n))$$

Assuming active BWP switching actions '1, 2, ..., n' on the other link(s) delay the completion of the ongoing active BWP switching on L1. Then the time to complete the ongoing active BWP switching (T1') is expressed by a general expression as follows:

$$T1' = f(T1, s1, s2,..,sn)$$

Specific examples of T' can be expressed as follows:

$$T1' = T1 + S(n)$$

$$T1' = T1 + s1+s2+...+sn$$

The scaling factor 'sn' may correspond to a duration over which the active BWP switching action n causes certain delay equal to 'sn' time units (e.g. sn slots) to the ongoing active BWP switching on L1.

According to a fifth example, while the active BWP switching from BWP11 to BWP12 is being performed by the UE on L1 and during this time if the UE is further configured to perform active BWP switching from BWP21 to BWP22 on L2, then the UE will prioritize the switching of the active BWP on particular link, e.g., different links are associated with different priority levels with regard to each other, e.g. L1, L2, and L3 may be associated with priority level 3, 1, and 2 respectively (e.g. larger level means higher priority and vice versa). The UE can determine the priority based on pre-defined rule or based on a message received from another node (e.g. from the serving network node). In one example, the link used for cellular operation (e.g. Uu interface) has a higher priority compared to the link used for SL. In another example, the link used for cellular operation (e.g. Uu interface) has lower priority compared to the link used for SL. In yet another example, the link used for higher reliability services (e.g. ultra-reliable low latency communication (URLLC)) has higher priority compared to the link used for lower priority services (e.g. eMBB). In yet another example, the priority levels between the SL and the Uu links (e.g. UL) can be associated with the amount of radio resources (e.g. time resources such as slots) allocated for operation on these links. For example, link with smaller percentage of allocated resources has higher priority compared to the link with higher percentage of allocated resources. For example, if SL uses 40% slots/frame while UL uses remaining 60% slots/frame then the active BWP switching on SL is prioritized over the active BWP switching on the UL. Each active BWP switching may map to a priority level, which identifies the relative priority of an active BWP switching for the UE.

In one variant, the UE will first perform the active BWP switching on the link with higher priority compared to the link with lower priority. In this case the UE may perform the active BWP switching on the link with higher priority without any additional delay, e.g., within T1 for L1 or within T2 for L2 (whichever has a higher priority). But the active BWP switching on the link with lower priority can be performed with some additional delay e.g. within T1' for L1 or within T2' for L2 (whichever has a lower priority).

According to a sixth example, it is assumed that the UE is capable of multiple receivers such that it can perform at maximum N number of active BWP switching actions in parallel (i.e. at the same time or at least over partially overlapping time). In this case all N number of active BWP switching actions can be performed by the UE in parallel over their respective original switching time periods e.g. L1, L2, and L3 in T1, T2, and T3 respectively (i.e., without any additional delay). This will require additional processing and memory resources compared to the case when the UE can do only one BWP switching at a time. For example, the UE may be capable of performing active BWP switching on DL, UL, and SL in parallel. The UE may be capable of performing multiple active BWP switching actions (N) even on the same link (e.g. on DL or on UL) in case more than one active BWPs are supported by the UE. In this case, the UE informs the network node about its capability and value of N, or value of N can be pre-defined or mapped to a type of UE (e.g. UE category). NW node uses this information to configure the maximum number of BWP switching actions in parallel (if needed) accordingly for the said UE. For example, if N=3 then the network node, if needed, may configure the UE to switch the active BWPs on DL, UL, and SL regardless of whether they are performed in parallel or not. Note that the L1, L2, and L3 may operate on the same carrier or on different carriers. In one variant, the value of N is predefined thus no communication is required to determine the value, and only the capability of performing active BWP switching is communicated between the UE and NW node.

According to a seventh example, it is assumed that the coverage mode of operation performed on BWP on L1 and BWP on L2 are different. In one specific example, it is assumed that L1 which provides the cellular coverage (Uu) provides operation under extended coverage while the operation on the second BWP on L2 are SL operation for devices in good SNR conditions (normal coverage). In this case, the UE may be based on a predefined rule (or configured rule), perform the BWP switch in sequence (e.g. serial manner), where BWP switch on L2 is performed first followed by the BWP switch in L1. The reason for this behavior is that in extended coverage, the typical services are less time-critical and can therefore tolerate more delay.

According to an eighth example, while the active BWP switching from BWP11 to BWP12 is being performed by the UE on L1 and during this time if the UE is further configured to perform active BWP switching from BWP21 to BWP22 on L2, then the active BWP switching delay requirements may depend on the operational mode.

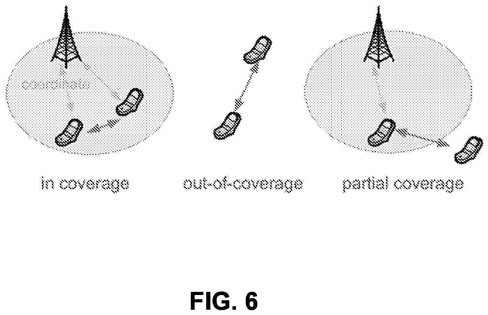

Examples of operational mode are in-coverage, partial coverage and out-of-coverage (any cell selection state) as shown in **Figure** 6. In some examples, when the UE is operating under in-coverage or partial coverage, the UE receives the control signaling/information from the network node and uses this information to carry out the V2X operation on sidelink. When BWPs of cellular link and sidelink are taking place in parallel, the UE may prioritize the active BWP switch on the cellular link (e.g. on L1 such as on DL and/or on UL) due to that they contain the control information and if they are delayed or lost, the UE may fail its operation of the sidelink.

According to a ninth example, while the active BWP switching from BWP11 to BWP12 is being performed by the UE on L1 and during this time if the UE is further configured to perform active BWP switching from BWP21 to BWP22 on L2, then the UE may choose to perform the switching based on the type of signals (and channels) being transmitted on the respective links which may overlap with the switching in the time domain. For example, the sidelink transmissions may contain retransmissions which are blindly transmitted, or they may contain periodic synchronization signals (e.g. SL synch signal (SLSS)). According to a rule, particular type of signals like these signals should not be impacted by the switching action. In one example of the rule, the active BWP switching on both links are performed earlier or after the occurrence of that particular type of signals. In another example if the switching is expected to affect the reception/transmission of particular type of signals (e.g. SLSS), then the UE may consider the switch on the link to be less critical than switch on the other link which may contain for example control information or data transmission on cellular (Uu) link, and it will perform the BWP switch accordingly.

According to a tenth example, while the active BWP switching from BWP11 to BWP12 is being performed by the UE on L1 and during this time if the UE is further configured to perform active BWP switching from BWP21 to BWP22 on L2, then the UE may choose to perform the switching based on the type of signals/channels being transmitted on the respective links which may overlap with the switching in the time domain. For example, the sidelink transmissions may contain retransmissions which are blindly transmitted, or they may contain periodic synchronization signals (e.g., SL synch signal (SLSS)). According to a rule, particular type of signals like these are basis for switching decision. For example, the UE performs switching only on the link that will not impact the particular type of signal. On the other hand, the UE will not perform switching only on the link that will impact the particular type of signal. In one example the UE may configured to perform switching on both SL and DL. But if switching action on SL will overlap with SLSS in the SL, then the UE does not perform switching on SL. The UE may however continue with switching on DL. Thus, one difference between the ninth and tenth example is that the latter the UE performs the active BWP switching on one link (e.g., the DL in the example) and discard the active BWP switching on the other (e.g., the SL in the example).

According to an eleventh example, while the active BWP switching from BWP11 to BWP12 is being performed by the UE on L1 and during this time if the UE is further configured to perform active BWP switching from BWP21 to BWP22 on L2, then the UE prioritizes certain type of active BWP switching. The type of the switching may be associated with certain performance level. Examples of type of BWP switches are timer-based BWP switch, DCI-based BWP switch and RRC-based BWP switch. Assume L1 refers to the Uu link and L2 refers to the sidelink. The UE prioritizes DCI based BWP switching on L1 over types of switching on SL. For example, the UE first perform switching on L1 and later on L2. The reason for such priority is that services provided on the sidelink can be time critical, and therefore a quick switching is needed, and DCI-based switch yields shorter delay than others. But if RRC-based switching is used on L1 and L2 then the UE prioritizes switching on L2 (i.e. SL). On the other hand, if both L1 and L2 are referred to cellular links (Uu), then UE may assume any type of BWP switch.

According to a twelfth example, if the UE is configured to perform active BWP switching on a link (e.g. DL on L1) and if this switching will impact the resources on another link (e.g. SL on L2, then the UE may delay the switching to ensure that the resources on the other link are not impacted. This is because during the switching the UE does not transmit and receive any signal. The delay in the switching action will therefore preserve the resources e.g. SL time slots. According to yet another aspect of this rule the UE may delay the switching on the link (e.g. on DL and/or on UL) to ensure that the resources on the other link (e.g. SL) are not impacted, based on the amount of resources e.g. only if number of time resources allocated for the other link is less than threshold and/or if the time resources for the other link occurs with a period shorter than certain threshold. For example, the active BWP switching on the DL (and/or on UL) can be delayed by the UE by at least the time period (Td) where as an example Td comprises number (J) of time resources (e.g. slots) allocated for SL + K number of time resources (e.g. slots) for margin. This is because few SL resources is allocated for the SL compared to the UL and SL resources occur periodically e.g. Y1% of slots per frame every Y2 number of frames are allocated.

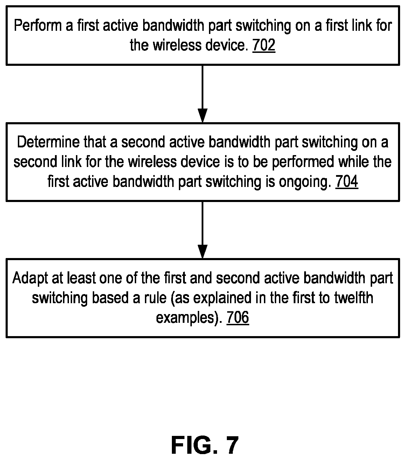

**Figure 7** is a flow diagram illustrating the concurrent bandwidth part switching on multiple links in a wireless network per one variant. The concurrent bandwidth part switching may be performed by a wireless device such as a UE as discussed herein. The wireless device is to communicate with one or more base stations such as the network nodes as discussed herein. The communication between the wireless device and the one or more base stations are through one or more uplinks and downlinks. The wireless device may communicate with one or more other wireless devices through one or more sidelinks.

At reference 702, the wireless device performs a first active bandwidth part switching on a first link for the wireless device. At reference 704, the wireless device determines that a second active bandwidth part switching on a second link for the wireless device is to be performed while the first active bandwidth part switching is ongoing. The at least partial overlapping in time in the first and second active bandwidth part switching is shown in Figure 5.

At reference 706, the wireless device adapts at least one of the first and second active bandwidth part switching based a rule. The rule is predefined in the wireless device or configured by the one or more base stations as discussed herein above. The applicable rules for the wireless device are discussed herein above relating to the first to twelfth examples.

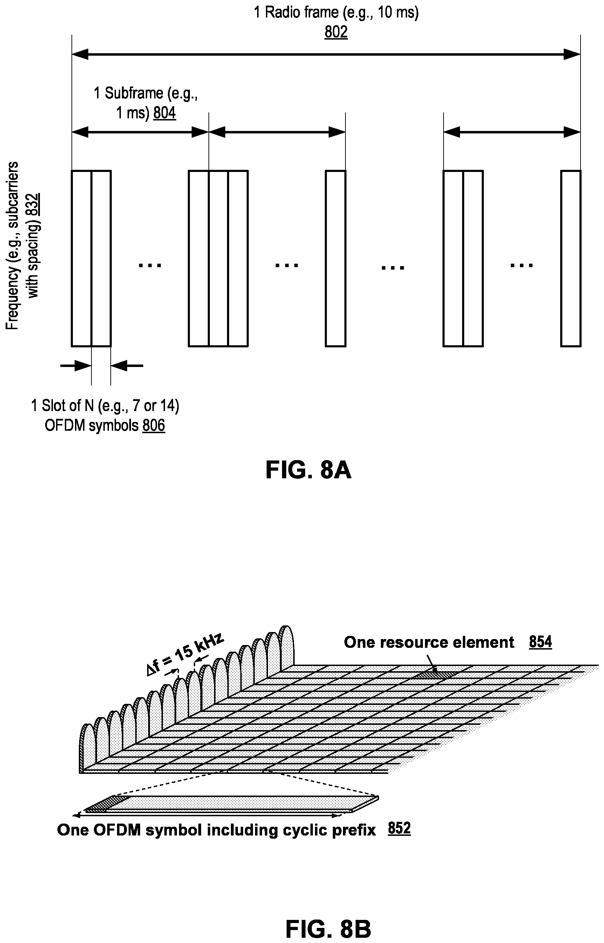

Radio Resource use in a Wireless Network may comprise different aspects, e.g. use of time resources and/or frequency resources and/or power and/or codes. The determination of synchronization signal (SS) block mapping pattern discussed herein above uses signaling and resources in a wireless network. **Figure 8A** shows an exemplary signal transmission hierarchy in a wireless network. The exemplary signal transmission hierarchy includes the transmission unit of frame such as radio frame 802. A radio frame 802 takes ten milliseconds to transmit in one variant. The frame may contain a number of subframes such as subframe 804. In this example, the radio frame 802 contains ten subframes, each takes one millisecond. Each subframe may contain a number of slots. For example, a subframe may contain two slots. Each slot such as the slot at reference 806 may contain a number of symbols. In one example, a slot contains either 7 or 14 symbols. The symbol is an orthogonal frequency-division multiplexing (OFDM) symbol in one variant.

The frame - subframe - slot - symbol hierarchy is an example of time domain hierarchy. In the frequency domain (as illustrated at reference 832), each symbol may be transmitted over a number of subcarriers. A symbol may be transmitted using a number of resource block (RB), each of which may contain 12 subcarriers in one variant. In one variant, each subcarrier includes a bandwidth (e.g., 7.5 kHz or 15 kHz) for transmission. One subcarrier × one symbol may be referred to as a resource element (RE), which is the smallest unit of resource to be allocated for signal transmission in one variant.

The illustrated frame structure offers an example for signal transmission. In this frame structure or other frame structures, data and signaling transmission is performed at a lowest level of time unit (symbol level in this case), which is included in a time unit (slot level in this example) a level over the lowest level of time unit in one variant. Data and signaling for one transmission from a source network device to a destination network device often use the same position within the signal transmission hierarchy, e.g., the same symbol position in consecutive slots (e.g., symbol #2 of each slot) or subframes, or in alternating slots (e.g., symbol #2 in every other slot) or subframes.

**Figure 8B** shows resource elements used for data and signaling transmission. The physical resources for transmission may be view as time and frequency grids as illustrated, where each resource element occupies a time period in the time domain and a frequency range in the frequency domain. Each OFDM symbol includes a cyclic prefix as illustrated at reference 852. Each OFDM symbol utilizes a number of resource elements. In this example, the sub-carrier spacing is 15k Hz, and the resource element (RE) 852 occupies an orthogonal frequency-division multiplexing (OFDM) subcarriers within an OFDM symbol. A network device may allocate some resource elements for a particular type of signaling. Such allocation may be specified through identifying the time period in the time domain and the frequency range in the frequency domain in a signal transmission hierarchy; or it may be specified through identifying specific resource elements within the signal transmission hierarchy.

For downlink control, a wireless network may use PDCCHs (physical downlink control channels) to transmit downlink control information (DCI), which provides downlink scheduling assignments and uplink scheduling grants. The PDCCHs are in general transmitted at the beginning of a slot and relate to data in the same or a later slot (for mini-slots PDCCH can also be transmitted within a regular slot). Different formats (sizes) of the PDCCHs are possible to handle different DCI payload sizes and different aggregation levels (i.e. different code rate for a given payload size). A UE is configured (implicitly and/or explicitly) to blindly monitor (or search) for a number of PDCCH candidates of different aggregation levels and DCI payload sizes. Upon detecting a valid DCI message (i.e. the decoding of a candidate is successful and the DCI contains a ID the UE is told to monitor) the UE follows the DCI (e.g. receives the corresponding downlink data or transmits in the uplink). The blind decoding process comes at a cost in complexity in the UE but is required to provide flexible scheduling and handling of different DCI payload sizes.

Different NR use-cases (e.g. MBB (mobile broadband), URLLC (ultra-reliable low latency communication)) require different control regions (e.g. time, frequency, numerologies, etc.) & PDCCH configurations (e.g. operating points, etc.) PDCCHs in NR are transmitted in configurable/dynamic control regions called control resource sets (CORESET) enabling variable use-cases. A CORESET is a subset of the downlink physical resource configured to carry control signaling. It is analogous to the control region in LTE but generalized in the sense that the set of physical resource blocks (PRBs) and the set of OFDM symbols in which it is located is configurable.

In one variant, CORESET configuration in frequency allocation is done in units of 6 RBs using NR DL resource allocation Type 0: bitmap of RB groups (RBGs). CORESET configuration in time spans of 1-3 consecutive OFDM symbols. For slot-based scheduling, the CORESET span at the beginning of a slot is at most 2 if demodulation reference signal (DMRS) is located in OFDM Symbol (OS) #2 and is at most 3 if DMRS is located in OS #3. A UE monitors one or more CORESETs. Multiple CORESETs can be overlapped in frequency and time for a UE.

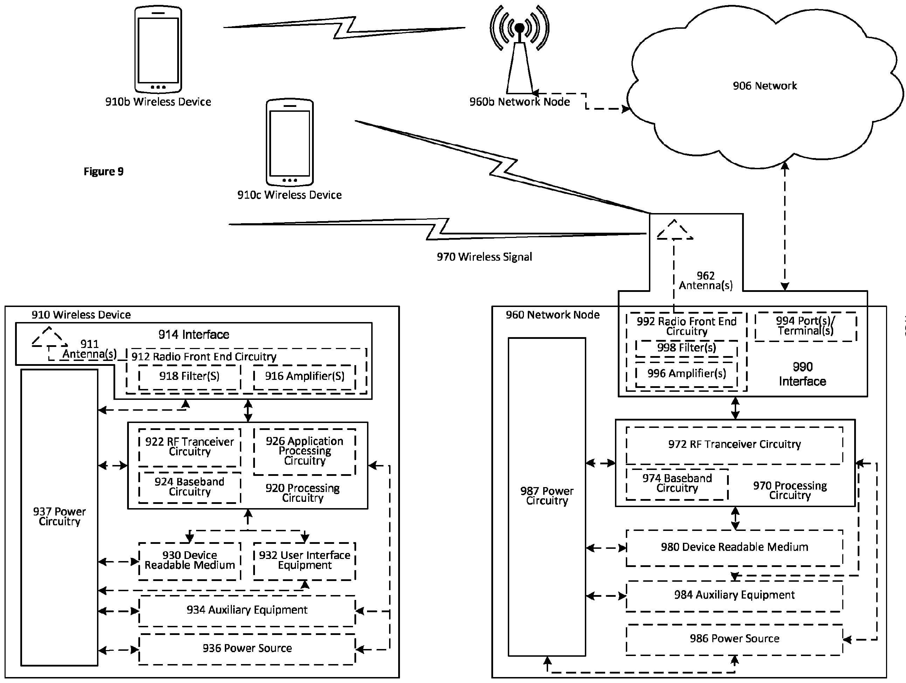

**Figure 9** shows an exemplary wireless network. Although the subject matter described herein may be implemented in any appropriate type of system using any suitable components, the variants disclosed herein are described in relation to a wireless network, such as the example wireless network illustrated in Figure 9. For simplicity, the wireless network of Figure 9 only depicts network 906, network nodes 960 and 960b, and WDs 910, 910b, and 910c. In practice, a wireless network may further include any additional elements suitable to support communication between wireless devices or between a wireless device and another communication device, such as a landline telephone, a service provider, or any other network node or end device. Of the illustrated components, network node 960 and wireless device (WD) 910 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some variants, the wireless network may be configured to operate according to specific standards or other types of predefined rules or procedures. Thus, particular variants of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 906 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 960 and WD 910 comprise various components described in more detail below. These components work together in order to provide network node and/or wireless device functionality, such as providing wireless connections in a wireless network. In different variants, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 9, network node 960 includes processing circuitry 970, device readable medium 980, interface 990, auxiliary equipment 984, power source 986, power circuitry 987, and antenna 962. Although network node 960 illustrated in the example wireless network of Figure 9 may represent a device that includes the illustrated combination of hardware components, other variants may comprise network nodes with different combinations of components. It is to be understood that a network node comprises any suitable combination of hardware and/or software needed to perform the tasks, features, functions and methods disclosed herein. Moreover, while the components of network node 960 are depicted as single boxes located within a larger box, or nested within multiple boxes, in practice, a network node may comprise multiple different physical components that make up a single illustrated component (e.g., device readable medium 980 may comprise multiple separate hard drives as well as multiple RAM modules).

Similarly, network node 960 may be composed of multiple physically separate components (e.g., a NodeB component and a RNC component, or a BTS component and a BSC component, etc.), which may each have their own respective components. In certain scenarios in which network node 960 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some variants, network node 960 may be configured to support multiple radio access technologies (RATs). In such variants, some components may be duplicated (e.g., separate device readable medium 980 for the different RATs) and some components may be reused (e.g., the same antenna 962 may be shared by the RATs). Network node 960 may also include multiple sets of the various illustrated components for different wireless technologies integrated into network node 960, such as, for example, GSM, WCDMA, LTE, NR, WiFi, or Bluetooth wireless technologies. These wireless technologies may be integrated into the same or different chip or set of chips and other components within network node 960.

Processing circuitry 970 is configured to perform any determining, calculating, or similar operations (e.g., certain obtaining operations) described herein as being provided by a network node. These operations performed by processing circuitry 970 may include processing information obtained by processing circuitry 970 by, for example, converting the obtained information into other information, comparing the obtained information or converted information to information stored in the network node, and/or performing one or more operations based on the obtained information or converted information, and as a result of said processing making a determination.

Processing circuitry 970 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 960 components, such as device readable medium 980, network node 960 functionality. For example, processing circuitry 970 may execute instructions stored in device readable medium 980 or in memory within processing circuitry 970. Such functionality may include providing any of the various wireless features, functions, or benefits discussed herein. In some variants, processing circuitry 970 may include a system on a chip (SOC).

In some variants, processing circuitry 970 may include one or more of radio frequency (RF) transceiver circuitry 972 and baseband processing circuitry 974. In some variants, radio frequency (RF) transceiver circuitry 972 and baseband processing circuitry 974 may be on separate chips (or sets of chips), boards, or units, such as radio units and digital units. In alternative variants, part or all of RF transceiver circuitry 972 and baseband processing circuitry 974 may be on the same chip or set of chips, boards, or units.

In certain variants, some or all of the functionality described herein as being provided by a network node, base station, eNB or other such network device may be performed by processing circuitry 970 executing instructions stored on device readable medium 980 or memory within processing circuitry 970. In alternative variants, some or all of the functionality may be provided by processing circuitry 970 without executing instructions stored on a separate or discrete device readable medium, such as in a hard-wired manner. In any of those variants, whether executing instructions stored on a device readable storage medium or not, processing circuitry 970 can be configured to perform the described functionality. The benefits provided by such functionality are not limited to processing circuitry 970 alone or to other components of network node 960, but are enjoyed by network node 960 as a whole, and/or by end users and the wireless network generally.

Device readable medium 980 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 970. Device readable medium 980 may store any suitable instructions, data or information, including a computer program, software, an application including one or more of logic, rules, code, tables, etc. and/or other instructions capable of being executed by processing circuitry 970 and, utilized by network node 960. Device readable medium 980 may be used to store any calculations made by processing circuitry 970 and/or any data received via interface 990. In some variants, processing circuitry 970 and device readable medium 980 may be considered to be integrated.

Interface 990 is used in the wired or wireless communication of signalling and/or data between network node 960, network 906, and/or WDs 910. As illustrated, interface 990 comprises port(s)/terminal(s) 994 to send and receive data, for example to and from network 906 over a wired connection. Interface 990 also includes radio front end circuitry 992 that may be coupled to, or in certain variants a part of, antenna 962. Radio front end circuitry 992 comprises filters 998 and amplifiers 996. Radio front end circuitry 992 may be connected to antenna 962 and processing circuitry 970. Radio front end circuitry may be configured to condition signals communicated between antenna 962 and processing circuitry 970. Radio front end circuitry 992 may receive digital data that is to be sent out to other network nodes or WDs via a wireless connection. Radio front end circuitry 992 may convert the digital data into a radio signal having the appropriate channel and bandwidth parameters using a combination of filters 998 and/or amplifiers 996. The radio signal may then be transmitted via antenna 962. Similarly, when receiving data, antenna 962 may collect radio signals which are then converted into digital data by radio front end circuitry 992. The digital data may be passed to processing circuitry 970. In other variants, the interface may comprise different components and/or different combinations of components.

In certain alternative variants, network node 960 may not include separate radio front end circuitry 992, instead, processing circuitry 970 may comprise radio front end circuitry and may be connected to antenna 962 without separate radio front end circuitry 992. Similarly, in some variants, all or some of RF transceiver circuitry 972 may be considered a part of interface 990. In still other variants, interface 990 may include one or more ports or terminals 994, radio front end circuitry 992, and RF transceiver circuitry 972, as part of a radio unit (not shown), and interface 990 may communicate with baseband processing circuitry 974, which is part of a digital unit (not shown).

Antenna 962 may include one or more antennas, or antenna arrays, configured to send and/or receive wireless signals. Antenna 962 may be coupled to radio front end circuitry 990 and may be any type of antenna capable of transmitting and receiving data and/or signals wirelessly. In some variants, antenna 962 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain variants, antenna 962 may be separate from network node 960 and may be connectable to network node 960 through an interface or port.

Antenna 962, interface 990, and/or processing circuitry 970 may be configured to perform any receiving operations and/or certain obtaining operations described herein as being performed by a network node. Any information, data and/or signals may be received from a wireless device, another network node and/or any other network equipment. Similarly, antenna 962, interface 990, and/or processing circuitry 970 may be configured to perform any transmitting operations described herein as being performed by a network node. Any information, data and/or signals may be transmitted to a wireless device, another network node and/or any other network equipment.

Power circuitry 987 may comprise, or be coupled to, power management circuitry and is configured to supply the components of network node 960 with power for performing the functionality described herein. Power circuitry 987 may receive power from power source 986. Power source 986 and/or power circuitry 987 may be configured to provide power to the various components of network node 960 in a form suitable for the respective components (e.g., at a voltage and current level needed for each respective component). Power source 986 may either be included in, or external to, power circuitry 987 and/or network node 960. For example, network node 960 may be connectable to an external power source (e.g., an electricity outlet) via an input circuitry or interface such as an electrical cable, whereby the external power source supplies power to power circuitry 987. As a further example, power source 986 may comprise a source of power in the form of a battery or battery pack which is connected to, or integrated in, power circuitry 987. The battery may provide backup power should the external power source fail. Other types of power sources, such as photovoltaic devices, may also be used.

Alternative variants of network node 960 may include additional components beyond those shown in Figure 9 that may be responsible for providing certain aspects of the network node's functionality, including any of the functionality described herein and/or any functionality necessary to support the subject matter described herein. For example, network node 960 may include user interface equipment to allow input of information into network node 960 and to allow output of information from network node 960. This may allow a user to perform diagnostic, maintenance, repair, and other administrative functions for network node 960.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some variants, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 910 includes antenna 911, interface 914, processing circuitry 920, device readable medium 930, user interface equipment 932, auxiliary equipment 934, power source 936 and power circuitry 937. WD 910 may include multiple sets of one or more of the illustrated components for different wireless technologies supported by WD 910, such as, for example, GSM, WCDMA, LTE, NR, WiFi, WiMAX, or Bluetooth wireless technologies, just to mention a few. These wireless technologies may be integrated into the same or different chips or set of chips as other components within WD 910.

Antenna 911 may include one or more antennas or antenna arrays, configured to send and/or receive wireless signals, and is connected to interface 914. In certain alternative variants, antenna 911 may be separate from WD 910 and be connectable to WD 910 through an interface or port. Antenna 911, interface 914, and/or processing circuitry 920 may be configured to perform any receiving or transmitting operations described herein as being performed by a WD. Any information, data and/or signals may be received from a network node and/or another WD. In some variants, radio front end circuitry and/or antenna 911 may be considered an interface.

As illustrated, interface 914 comprises radio front end circuitry 912 and antenna 911. Radio front end circuitry 912 comprise one or more filters 918 and amplifiers 916. Radio front end circuitry 914 is connected to antenna 911 and processing circuitry 920, and is configured to condition signals communicated between antenna 911 and processing circuitry 920. Radio front end circuitry 912 may be coupled to or a part of antenna 911. In some variants, WD 910 may not include separate radio front end circuitry 912; rather, processing circuitry 920 may comprise radio front end circuitry and may be connected to antenna 911. Similarly, in some variants, some or all of RF transceiver circuitry 922 may be considered a part of interface 914. Radio front end circuitry 912 may receive digital data that is to be sent out to other network nodes or WDs via a wireless connection. Radio front end circuitry 912 may convert the digital data into a radio signal having the appropriate channel and bandwidth parameters using a combination of filters 918 and/or amplifiers 916. The radio signal may then be transmitted via antenna 911. Similarly, when receiving data, antenna 911 may collect radio signals which are then converted into digital data by radio front end circuitry 912. The digital data may be passed to processing circuitry 920. In other variants, the interface may comprise different components and/or different combinations of components.

Processing circuitry 920 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 910 components, such as device readable medium 930, WD 910 functionality. Such functionality may include providing any of the various wireless features or benefits discussed herein. For example, processing circuitry 920 may execute instructions stored in device readable medium 930 or in memory within processing circuitry 920 to provide the functionality disclosed herein.

As illustrated, processing circuitry 920 includes one or more of RF transceiver circuitry 922, baseband processing circuitry 924, and application processing circuitry 926. In other variants, the processing circuitry may comprise different components and/or different combinations of components. In certain variants processing circuitry 920 of WD 910 may comprise a SOC. In some variants, RF transceiver circuitry 922, baseband processing circuitry 924, and application processing circuitry 926 may be on separate chips or sets of chips. In alternative variants, part or all of baseband processing circuitry 924 and application processing circuitry 926 may be combined into one chip or set of chips, and RF transceiver circuitry 922 may be on a separate chip or set of chips. In still alternative variants, part or all of RF transceiver circuitry 922 and baseband processing circuitry 924 may be on the same chip or set of chips, and application processing circuitry 926 may be on a separate chip or set of chips. In yet other alternative variants, part or all of RF transceiver circuitry 922, baseband processing circuitry 924, and application processing circuitry 926 may be combined in the same chip or set of chips. In some variants, RF transceiver circuitry 922 may be a part of interface 914. RF transceiver circuitry 922 may condition RF signals for processing circuitry 920.

In certain variants, some or all of the functionality described herein as being performed by a WD may be provided by processing circuitry 920 executing instructions stored on device readable medium 930, which in certain variants may be a computer-readable storage medium. In alternative variants, some or all of the functionality may be provided by processing circuitry 920 without executing instructions stored on a separate or discrete device readable storage medium, such as in a hard-wired manner. In any of those particular variants, whether executing instructions stored on a device readable storage medium or not, processing circuitry 920 can be configured to perform the described functionality. The benefits provided by such functionality are not limited to processing circuitry 920 alone or to other components of WD 910, but are enjoyed by WD 910 as a whole, and/or by end users and the wireless network generally.

Processing circuitry 920 may be configured to perform any determining, calculating, or similar operations (e.g., certain obtaining operations) described herein as being performed by a WD. These operations, as performed by processing circuitry 920, may include processing information obtained by processing circuitry 920 by, for example, converting the obtained information into other information, comparing the obtained information or converted information to information stored by WD 910, and/or performing one or more operations based on the obtained information or converted information, and as a result of said processing making a determination.

Device readable medium 930 may be operable to store a computer program, software, an application including one or more of logic, rules, code, tables, etc. and/or other instructions capable of being executed by processing circuitry 920. Device readable medium 930 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 920. In some variants, processing circuitry 920 and device readable medium 930 may be considered to be integrated.

User interface equipment 932 may provide components that allow for a human user to interact with WD 910. Such interaction may be of many forms, such as visual, audial, tactile, etc. User interface equipment 932 may be operable to produce output to the user and to allow the user to provide input to WD 910. The type of interaction may vary depending on the type of user interface equipment 932 installed in WD 910. For example, if WD 910 is a smart phone, the interaction may be via a touch screen; if WD 910 is a smart meter, the interaction may be through a screen that provides usage (e.g., the number of gallons used) or a speaker that provides an audible alert (e.g., if smoke is detected). User interface equipment 932 may include input interfaces, devices and circuits, and output interfaces, devices and circuits. User interface equipment 932 is configured to allow input of information into WD 910, and is connected to processing circuitry 920 to allow processing circuitry 920 to process the input information. User interface equipment 932 may include, for example, a microphone, a proximity or other sensor, keys/buttons, a touch display, one or more cameras, a USB port, or other input circuitry. User interface equipment 932 is also configured to allow output of information from WD 910, and to allow processing circuitry 920 to output information from WD 910. User interface equipment 932 may include, for example, a speaker, a display, vibrating circuitry, a USB port, a headphone interface, or other output circuitry. Using one or more input and output interfaces, devices, and circuits, of user interface equipment 932, WD 910 may communicate with end users and/or the wireless network, and allow them to benefit from the functionality described herein.

Auxiliary equipment 934 is operable to provide more specific functionality which may not be generally performed by WDs. This may comprise specialized sensors for doing measurements for various purposes, interfaces for additional types of communication such as wired communications. The inclusion and type of components of auxiliary equipment 934 may vary depending on the variant and/or scenario.

Power source 936 may, in some variants, be in the form of a battery or battery pack. Other types of power sources, such as an external power source (e.g., an electricity outlet), photovoltaic devices or power cells, may also be used. WD 910 may further comprise power circuitry 937 for delivering power from power source 936 to the various parts of WD 910 which need power from power source 936 to carry out any functionality described or indicated herein. Power circuitry 937 may in certain variants comprise power management circuitry. Power circuitry 937 may additionally or alternatively be operable to receive power from an external power source; in which case WD 910 may be connectable to the external power source (such as an electricity outlet) via input circuitry or an interface such as an electrical power cable. Power circuitry 937 may also in certain variants be operable to deliver power from an external power source to power source 936. This may be, for example, for the charging of power source 936. Power circuitry 937 may perform any formatting, converting, or other modification to the power from power source 936 to make the power suitable for the respective components of WD 910 to which power is supplied.

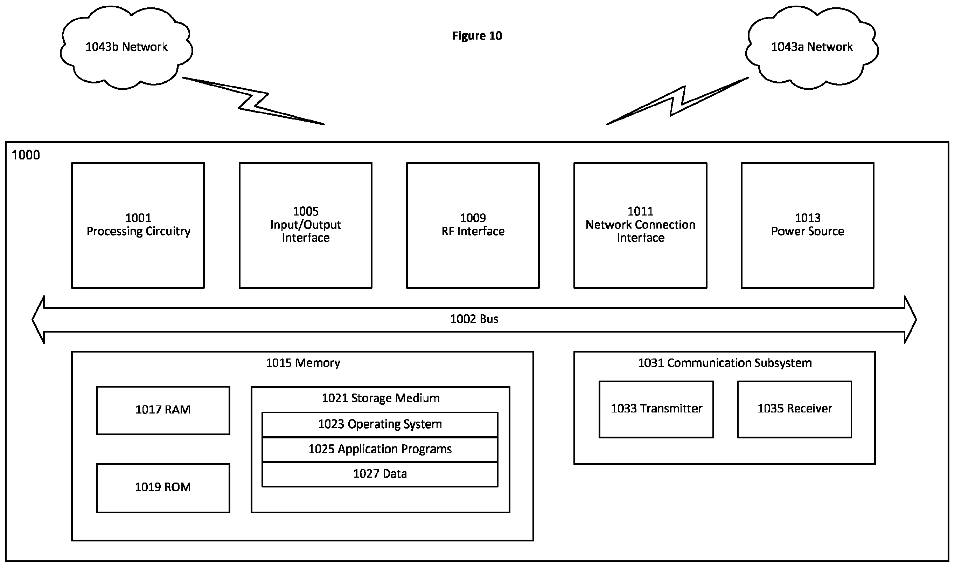

**Figure 10** shows an exemplary User Equipment. Figure 10 illustrates one variant of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 10200 may be any UE identified by the 3rd Generation Partnership Project (3GPP), including a NB-IoT UE, a machine type communication (MTC) UE, and/or an enhanced MTC (eMTC) UE. UE 1000, as illustrated in Figure 10, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 10 is a UE, the components discussed herein are equally applicable to a WD, and vice-versa.

In Figure 10, UE 1000 includes processing circuitry 1001 that is operatively coupled to input/output interface 1005, radio frequency (RF) interface 1009, network connection interface 1011, memory 1015 including random access memory (RAM) 1017, read-only memory (ROM) 1019, and storage medium 1021 or the like, communication subsystem 1031, power source 1033, and/or any other component, or any combination thereof. Storage medium 1021 includes operating system 1023, application program 1025, and data 1027. In other variants, storage medium 1021 may include other similar types of information. Certain UEs may utilize all of the components shown in Figure 10, or only a subset of the components. The level of integration between the components may vary from one UE to another UE. Further, certain UEs may contain multiple instances of a component, such as multiple processors, memories, transceivers, transmitters, receivers, etc.

In Figure 10, processing circuitry 1001 may be configured to process computer instructions and data. Processing circuitry 1001 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1001 may include two central processing units (CPUs). Data may be information in a form suitable for use by a computer.

In the depicted variant, input/output interface 1005 may be configured to provide a communication interface to an input device, output device, or input and output device. UE 1000 may be configured to use an output device via input/output interface 1005. An output device may use the same type of interface port as an input device. For example, a USB port may be used to provide input to and output from UE 1000. The output device may be a speaker, a sound card, a video card, a display, a monitor, a printer, an actuator, an emitter, a smartcard, another output device, or any combination thereof. UE 1000 may be configured to use an input device via input/output interface 1005 to allow a user to capture information into UE 1000. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 10, RF interface 1009 may be configured to provide a communication interface to RF components such as a transmitter, a receiver, and an antenna. Network connection interface 1011 may be configured to provide a communication interface to network 1043a. Network 1043a may encompass wired and/or wireless networks such as a local-area network (LAN), a wide-area network (WAN), a computer network, a wireless network, a telecommunications network, another like network or any combination thereof. For example, network 1043a may comprise a Wi-Fi network. Network connection interface 1011 may be configured to include a receiver and a transmitter interface used to communicate with one or more other devices over a communication network according to one or more communication protocols, such as Ethernet, TCP/IP, SONET, ATM, or the like. Network connection interface 1011 may implement receiver and transmitter functionality appropriate to the communication network links (e.g., optical, electrical, and the like). The transmitter and receiver functions may share circuit components, software or firmware, or alternatively may be implemented separately.

RAM 1017 may be configured to interface via bus 1002 to processing circuitry 1001 to provide storage or caching of data or computer instructions during the execution of software programs such as the operating system, application programs, and device drivers. ROM 1019 may be configured to provide computer instructions or data to processing circuitry 1001. For example, ROM 1019 may be configured to store invariant low-level system code or data for basic system functions such as basic input and output (I/O), startup, or reception of keystrokes from a keyboard that are stored in a non-volatile memory. Storage medium 1021 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1021 may be configured to include operating system 1023, application program 1025 such as a web browser application, a widget or gadget engine or another application, and data file 1027. Storage medium 1021 may store, for use by UE 1000, any of a variety of various operating systems or combinations of operating systems.

Storage medium 1021 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1021 may allow UE 1000 to access computer-executable instructions, application programs or the like, stored on transitory or non-transitory memory media, to off-load data, or to upload data. An article of manufacture, such as one utilizing a communication system may be tangibly embodied in storage medium 1021, which may comprise a device readable medium.

In Figure 10, processing circuitry 1001 may be configured to communicate with network 1043b using communication subsystem 1031. Network 1043a and network 1043b may be the same network or networks or different network or networks. Communication subsystem 1031 may be configured to include one or more transceivers used to communicate with network 1043b. For example, communication subsystem 1031 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 1033 and/or receiver 1035 to implement transmitter or receiver functionality, respectively, appropriate to the RAN links (e.g., frequency allocations and the like). Further, transmitter 1033 and receiver 1035 of each transceiver may share circuit components, software or firmware, or alternatively may be implemented separately.

In the illustrated variant, the communication functions of communication subsystem 1031 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1031 may include cellular communication, Wi-Fi communication, Bluetooth communication, and GPS communication. Network 1043b may encompass wired and/or wireless networks such as a local-area network (LAN), a wide-area network (WAN), a computer network, a wireless network, a telecommunications network, another like network or any combination thereof. For example, network 1043b may be a cellular network, a Wi-Fi network, and/or a near-field network. Power source 1013 may be configured to provide alternating current (AC) or direct current (DC) power to components of UE 1000.

The features, benefits and/or functions described herein may be implemented in one of the components of UE 1000 or partitioned across multiple components of UE 1000. Further, the features, benefits, and/or functions described herein may be implemented in any combination of hardware, software or firmware. In one example, communication subsystem 1031 may be configured to include any of the components described herein. Further, processing circuitry 1001 may be configured to communicate with any of such components over bus 1002. In another example, any of such components may be represented by program instructions stored in memory that when executed by processing circuitry 1001 perform the corresponding functions described herein. In another example, the functionality of any of such components may be partitioned between processing circuitry 1001 and communication subsystem 1031. In another example, the non-computationally intensive functions of any of such components may be implemented in software or firmware and the computationally intensive functions may be implemented in hardware.

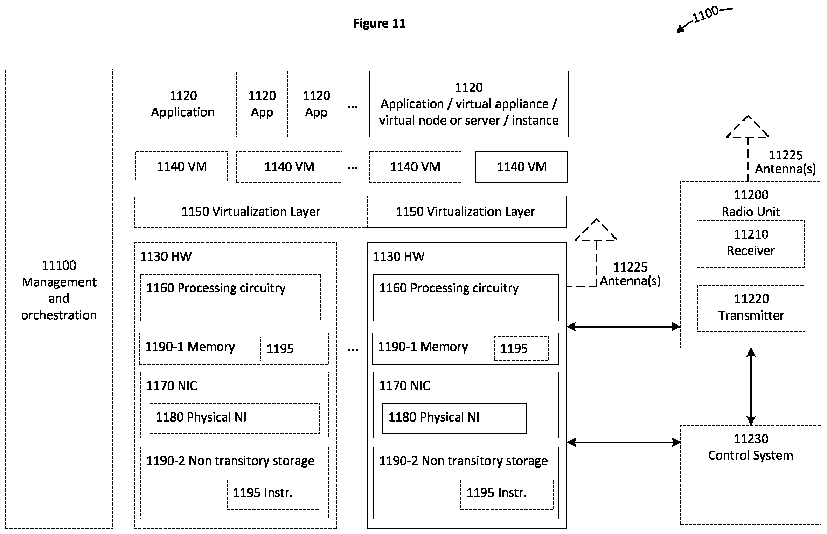

**Figure 11** shows an exemplary virtualization environment in accordance with some variants. Figure 11 is a schematic block diagram illustrating a virtualization environment 1100 in which functions implemented by some variants may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some variants, some or all of the functions described herein may be implemented as virtual components executed by one or more virtual machines implemented in one or more virtual environments 1100 hosted by one or more of hardware nodes 1130. Further, in variants in which the virtual node is not a radio access node or does not require radio connectivity (e.g., a core network node), then the network node may be entirely virtualized.

The functions may be implemented by one or more applications 1120 (which may alternatively be called software instances, virtual appliances, network functions, virtual nodes, virtual network functions, etc.) operative to implement some of the features, functions, and/or benefits of some of the variants disclosed herein. Applications 1120 are run in virtualization environment 1100 which provides hardware 1130 comprising processing circuitry 1160 and memory 1190. Memory 1190 contains instructions 1195 executable by processing circuitry 1160 whereby application 1120 is operative to provide one or more of the features, benefits, and/or functions disclosed herein.

Virtualization environment 1100, comprises general-purpose or special-purpose network hardware devices 1130 comprising a set of one or more processors or processing circuitry 1160, which may be commercial off-the-shelf (COTS) processors, dedicated Application Specific Integrated Circuits (ASICs), or any other type of processing circuitry including digital or analog hardware components or special purpose processors. Each hardware device may comprise memory 1190-1 which may be non-persistent memory for temporarily storing instructions 1195 or software executed by processing circuitry 1160. Each hardware device may comprise one or more network interface controllers (NICs) 1170, also known as network interface cards, which include physical network interface 1180. Each hardware device may also include non-transitory, persistent, machine-readable storage media 1190-2 having stored therein software 1195 and/or instructions executable by processing circuitry 1160. Software 1195 may include any type of software including software for instantiating one or more virtualization layers 1150 (also referred to as hypervisors), software to execute virtual machines 1140 as well as software allowing it to execute functions, features and/or benefits described in relation with some variants described herein.

Virtual machines 1140, comprise virtual processing, virtual memory, virtual networking or interface and virtual storage, and may be run by a corresponding virtualization layer 1150 or hypervisor. Different variants of the instance of virtual appliance 1120 may be implemented on one or more of virtual machines 1140, and the implementations may be made in different ways.

During operation, processing circuitry 1160 executes software 1195 to instantiate the hypervisor or virtualization layer 1150, which may sometimes be referred to as a virtual machine monitor (VMM). Virtualization layer 1150 may present a virtual operating platform that appears like networking hardware to virtual machine 1140.

As shown in Figure 11, hardware 1130 may be a standalone network node with generic or specific components. Hardware 1130 may comprise antenna 11225 and may implement some functions via virtualization. Alternatively, hardware 1130 may be part of a larger cluster of hardware (e.g. such as in a data center or customer premise equipment (CPE)) where many hardware nodes work together and are managed via management and orchestration (MANO) 11100, which, among others, oversees lifecycle management of applications 1120.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 1140 may be a software implementation of a physical machine that runs programs as if they were executing on a physical, non-virtualized machine. Each of virtual machines 1140, and that part of hardware 1130 that executes that virtual machine, be it hardware dedicated to that virtual machine and/or hardware shared by that virtual machine with others of the virtual machines 1140, forms a separate virtual network elements (VNE).

Still in the context of NFV, Virtual Network Function (VNF) is responsible for handling specific network functions that run in one or more virtual machines 1140 on top of hardware networking infrastructure 1130 and corresponds to application 1120 in Figure 11.

In some variants, one or more radio units 11200 that each include one or more transmitters 11220 and one or more receivers 11210 may be coupled to one or more antennas 11225. Radio units 11200 may communicate directly with hardware nodes 1130 via one or more appropriate network interfaces and may be used in combination with the virtual components to provide a virtual node with radio capabilities, such as a radio access node or a base station.

In some variants, some signalling can be effected with the use of control system 11230 which may alternatively be used for communication between the hardware nodes 1130 and radio units 11200.

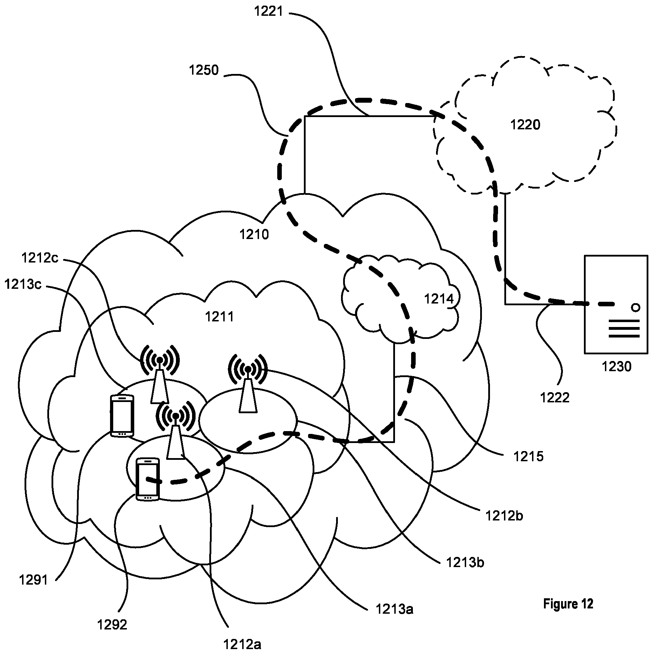

**Figure 12** shows an exemplary telecommunication network connected via an intermediate network to a host computer in accordance with some variants. With reference to Figure 12, in accordance with a variant, a communication system includes telecommunication network 1210, such as a 3GPP-type cellular network, which comprises access network 1211, such as a radio access network, and core network 1214. Access network 1211 comprises a plurality of base stations 1212a, 1212b, 1212c, such as NBs, eNBs, gNBs or other types of wireless access points, each defining a corresponding coverage area 1213a, 1213b, 1213c. Each base station 1212a, 1212b, 1212c is connectable to core network 1214 over a wired or wireless connection 1215. A first UE 1291 located in coverage area 1213c is configured to wirelessly connect to, or be paged by, the corresponding base station 1212c. A second

UE 1292 in coverage area 1213a is wirelessly connectable to the corresponding base station 1212a. While a plurality of UEs 1291, 1292 are illustrated in this example, the disclosed variants are equally applicable to a situation where a sole UE is in the coverage area or where a sole UE is connecting to the corresponding base station 1212.

Telecommunication network 1210 is itself connected to host computer 1230, which may be embodied in the hardware and/or software of a standalone server, a cloud-implemented server, a distributed server or as processing resources in a server farm. Host computer 1230 may be under the ownership or control of a service provider, or may be operated by the service provider or on behalf of the service provider. Connections 1221 and 1222 between telecommunication network 1210 and host computer 1230 may extend directly from core network 1214 to host computer 1230 or may go via an optional intermediate network 1220. Intermediate network 1220 may be one of, or a combination of more than one of, a public, private or hosted network; intermediate network 1220, if any, may be a backbone network or the Internet; in particular, intermediate network 1220 may comprise two or more sub-networks (not shown).

The communication system of Figure 12 as a whole enables connectivity between the connected UEs 1291, 1292 and host computer 1230. The connectivity may be described as an over-the-top (OTT) connection 1250. Host computer 1230 and the connected UEs 1291, 1292 are configured to communicate data and/or signaling via OTT connection 1250, using access network 1211, core network 1214, any intermediate network 1220 and possible further infrastructure (not shown) as intermediaries. OTT connection 1250 may be transparent in the sense that the participating communication devices through which OTT connection 1250 passes are unaware of routing of uplink and downlink communications. For example, base station 1212 may not or need not be informed about the past routing of an incoming downlink communication with data originating from host computer 1230 to be forwarded (e.g., handed over) to a connected UE 1291. Similarly, base station 1212 need not be aware of the future routing of an outgoing uplink communication originating from the UE 1291 towards the host computer 1230.

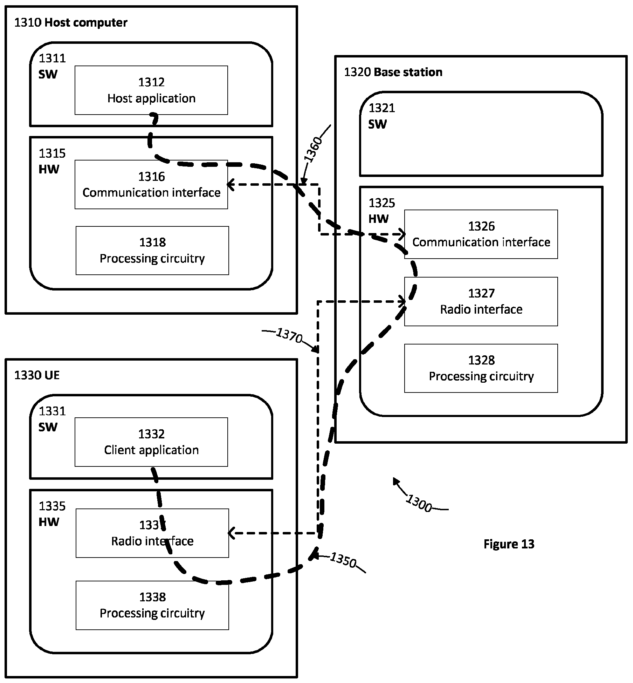

**Figure 13** shows an exemplary host computer communicating via a base station with a user equipment over a partially wireless connection. Example implementations, in accordance with a variant, of the UE, base station and host computer discussed in the preceding paragraphs will now be described with reference to Figure 13. In communication system 1300, host computer 1310 comprises hardware 1315 including communication interface 1316 configured to set up and maintain a wired or wireless connection with an interface of a different communication device of communication system 1300. Host computer 1310 further comprises processing circuitry 1318, which may have storage and/or processing capabilities. In particular, processing circuitry 1318 may comprise one or more programmable processors, application-specific integrated circuits, field programmable gate arrays or combinations of these (not shown) adapted to execute instructions. Host computer 1310 further comprises software 1311, which is stored in or accessible by host computer 1310 and executable by processing circuitry 1318. Software 1311 includes host application 1312. Host application 1312 may be operable to provide a service to a remote user, such as UE 1330 connecting via OTT connection 1350 terminating at UE 1330 and host computer 1310. In providing the service to the remote user, host application 1312 may provide user data which is transmitted using OTT connection 1350.

Communication system 1300 further includes base station 1320 provided in a telecommunication system and comprising hardware 1325 enabling it to communicate with host computer 1310 and with UE 1330. Hardware 1325 may include communication interface 1326 for setting up and maintaining a wired or wireless connection with an interface of a different communication device of communication system 1300, as well as radio interface 1327 for setting up and maintaining at least wireless connection 1370 with UE 1330 located in a coverage area (not shown in Figure 13) served by base station 1320. Communication interface 1326 may be configured to facilitate connection 1360 to host computer 1310. Connection 1360 may be direct or it may pass through a core network (not shown in Figure 13) of the telecommunication system and/or through one or more intermediate networks outside the telecommunication system. In the variant shown, hardware 1325 of base station 1320 further includes processing circuitry 1328, which may comprise one or more programmable processors, application-specific integrated circuits, field programmable gate arrays or combinations of these (not shown) adapted to execute instructions. Base station 1320 further has software 1321 stored internally or accessible via an external connection.

Communication system 1300 further includes UE 1330 already referred to. Its hardware 1335 may include radio interface 1337 configured to set up and maintain wireless connection 1370 with a base station serving a coverage area in which UE 1330 is currently located. Hardware 1335 of UE 1330 further includes processing circuitry 1338, which may comprise one or more programmable processors, application-specific integrated circuits, field programmable gate arrays or combinations of these (not shown) adapted to execute instructions. UE 1330 further comprises software 1331, which is stored in or accessible by UE 1330 and executable by processing circuitry 1338. Software 1331 includes client application 1332. Client application 1332 may be operable to provide a service to a human or non-human user via UE 1330, with the support of host computer 1310. In host computer 1310, an executing host application 1312 may communicate with the executing client application 1332 via OTT connection 1350 terminating at UE 1330 and host computer 1310. In providing the service to the user, client application 1332 may receive request data from host application 1312 and provide user data in response to the request data. OTT connection 1350 may transfer both the request data and the user data. Client application 1332 may interact with the user to generate the user data that it provides.

It is noted that host computer 1310, base station 1320 and UE 1330 illustrated in Figure 13 may be similar or identical to host computer 1230, one of base stations 1212a, 1212b, 1212c and one of UEs 1291, 1292 of Figure 12, respectively. This is to say, the inner workings of these entities may be as shown in Figure 13 and independently, the surrounding network topology may be that of Figure 12.

In Figure 13, OTT connection 1350 has been drawn abstractly to illustrate the communication between host computer 1310 and UE 1330 via base station 1320, without explicit reference to any intermediary devices and the precise routing of messages via these devices. Network infrastructure may determine the routing, which it may be configured to hide from UE 1330 or from the service provider operating host computer 1310, or both. While OTT connection 1350 is active, the network infrastructure may further take decisions by which it dynamically changes the routing (e.g., on the basis of load balancing consideration or reconfiguration of the network).

Wireless connection 1370 between UE 1330 and base station 1320 is in accordance with the teachings of the variants described throughout this disclosure. One or more of the various variants improve the performance of OTT services provided to UE 1330 using OTT connection 1350, in which wireless connection 1370 forms the last segment. More precisely, the teachings of these variants may improve the active BWP switching and thereby provide benefits such as concurrent BWP switching on multiple links of a UE may be performed without wasting resources.

A measurement procedure may be provided for the purpose of monitoring data rate, latency and other factors on which the one or more variants improve. There may further be an optional network functionality for reconfiguring OTT connection 1350 between host computer 1310 and UE 1330, in response to variations in the measurement results. The measurement procedure and/or the network functionality for reconfiguring OTT connection 1350 may be implemented in software 1311 and hardware 1315 of host computer 1310 or in software 1331 and hardware 1335 of UE 1330, or both. In variants, sensors (not shown) may be deployed in or in association with communication devices through which OTT connection 1350 passes; the sensors may participate in the measurement procedure by supplying values of the monitored quantities exemplified above, or supplying values of other physical quantities from which software 1311, 1331 may compute or estimate the monitored quantities. The reconfiguring of OTT connection 1350 may include message format, retransmission settings, preferred routing, etc.; the reconfiguring need not affect base station 1320, and it may be unknown or imperceptible to base station 1320. Such procedures and functionalities may be known and practiced in the art. In certain variants, measurements may involve proprietary UE signaling facilitating host computer 1310's measurements of throughput, propagation times, latency and the like. The measurements may be implemented in that software 1311 and 1331 causes messages to be transmitted, in particular empty or 'dummy' messages, using OTT connection 1350 while it monitors propagation times, errors, etc.

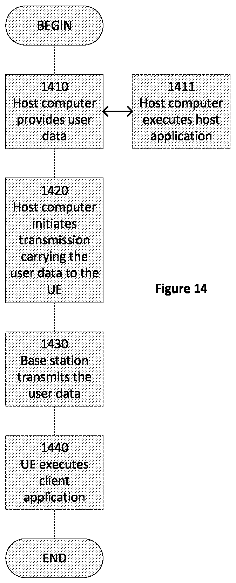

**Figure 14** shows exemplary methods implemented in a communication system including a host computer, a base station and a user equipment. Figure 14 is a flowchart illustrating a method implemented in a communication system, in accordance with one variant. The communication system includes a host computer, a base station and a UE which may be those described with reference to Figures 12 and 13. For simplicity of the present disclosure, only drawing references to Figure 14 will be included in this section. In step 1410, the host computer provides user data. In substep 1411 (which may be optional) of step 1410, the host computer provides the user data by executing a host application. In step 1420, the host computer initiates a transmission carrying the user data to the UE. In step 1430 (which may be optional), the base station transmits to the UE the user data which was carried in the transmission that the host computer initiated, in accordance with the teachings of the variants described throughout this disclosure. In step 1440 (which may also be optional), the UE executes a client application associated with the host application executed by the host computer.

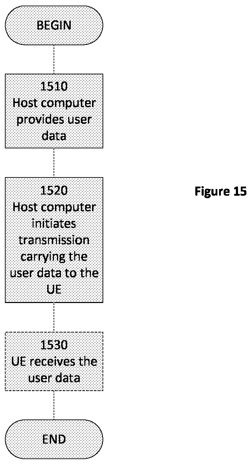

**Figure 15** shows exemplary methods implemented in a communication system including a host computer, a base station and a user equipment in accordance with some variants. Figure 15 is a flowchart illustrating a method implemented in a communication system, in accordance with one variant. The communication system includes a host computer, a base station and a UE which may be those described with reference to Figures 12 and 13. For simplicity of the present disclosure, only drawing references to Figure 15 will be included in this section. In step 1510 of the method, the host computer provides user data. In an optional substep (not shown) the host computer provides the user data by executing a host application. In step 1520, the host computer initiates a transmission carrying the user data to the UE. The transmission may pass via the base station, in accordance with the teachings of the variants described throughout this disclosure. In step 1530 (which may be optional), the UE receives the user data carried in the transmission.

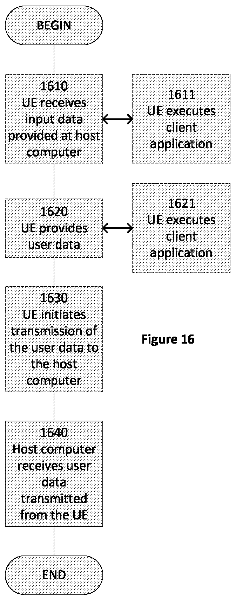

**Figure 16** shows an exemplary methods implemented in a communication system including a host computer, a base station and a user equipment. Figure 16 is a flowchart illustrating a method implemented in a communication system, in accordance with one variant. The communication system includes a host computer, a base station and a UE which may be those described with reference to Figures 12 and 13. For simplicity of the present disclosure, only drawing references to Figure 16 will be included in this section. In step 1610 (which may be optional), the UE receives input data provided by the host computer. Additionally or alternatively, in step 1620, the UE provides user data. In substep 1621 (which may be optional) of step 1620, the UE provides the user data by executing a client application. In substep 1611 (which may be optional) of step 1610, the UE executes a client application which provides the user data in reaction to the received input data provided by the host computer. In providing the user data, the executed client application may further consider user input received from the user. Regardless of the specific manner in which the user data was provided, the UE initiates, in substep 1630 (which may be optional), transmission of the user data to the host computer. In step 1640 of the method, the host computer receives the user data transmitted from the UE, in accordance with the teachings of the variants described throughout this disclosure.

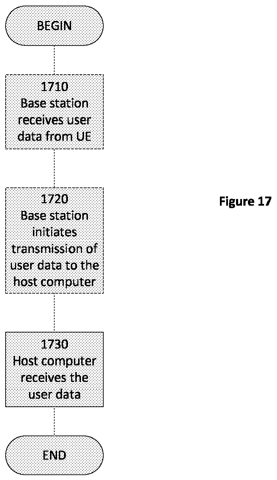

**Figure 17** shows exemplary methods implemented in a communication system including a host computer, a base station and a user equipment. Figure 17 is a flowchart illustrating a method implemented in a communication system, in accordance with one variant. The communication system includes a host computer, a base station and a UE which may be those described with reference to Figures 12 and 13. For simplicity of the present disclosure, only drawing references to Figure 17 will be included in this section. In step 1710 (which may be optional), in accordance with the teachings of the variants described throughout this disclosure, the base station receives user data from the UE. In step 1720 (which may be optional), the base station initiates transmission of the received user data to the host computer. In step 1730 (which may be optional), the host computer receives the user data carried in the transmission initiated by the base station.

Transmitting in downlink may pertain to transmission from the network or network node to the terminal. Transmitting in uplink may pertain to transmission from the terminal to the network or network node. Transmitting in sidelink may pertain to (direct) transmission from one terminal to another. Uplink, downlink and sidelink (e.g., sidelink transmission and reception) may be considered communication directions. In some variants, uplink and downlink may also be used to described wireless communication between network nodes, e.g. for wireless backhaul and/or relay communication and/or (wireless) network communication for example between base stations or similar network nodes, in particular communication terminating at such. It may be considered that backhaul and/or relay communication and/or network communication is implemented as a form of sidelink or uplink communication or similar thereto.

Control information or a control information message or corresponding signaling (control signaling) may be transmitted on a control channel, e.g. a physical control channel, which may be a downlink channel or (or a sidelink channel in some cases, e.g. one UE scheduling another UE). For example, control information/allocation information may be signaled by a network node on PDCCH (Physical Downlink Control Channel) and/or a PDSCH (Physical Downlink Shared Channel) and/or a HARQ-specific channel. Acknowledgement signaling, e.g. as a form of control information or signaling like uplink control information/signaling, may be transmitted by a terminal on a PUCCH (Physical Uplink Control Channel) and/or PUSCH (Physical Uplink Shared Channel) and/or a HARQ-specific channel. Multiple channels may apply for multi-component/multi-carrier indication or signaling.

There is generally considered a program product comprising instructions adapted for causing processing and/or control circuitry to carry out and/or control any method described herein, in particular when executed on the processing and/or control circuitry. Also, there is considered a carrier medium arrangement carrying and/or storing a program product as described herein.

A carrier medium arrangement may comprise one or more carrier media. Generally, a carrier medium may be accessible and/or readable and/or receivable by processing or control circuitry. Storing data and/or a program product and/or code may be seen as part of carrying data and/or a program product and/or code. A carrier medium generally may comprise a guiding/transporting medium and/or a storage medium. A guiding/transporting medium may be adapted to carry and/or carry and/or store signals, in particular electromagnetic signals and/or electrical signals and/or magnetic signals and/or optical signals. A carrier medium, in particular a guiding/transporting medium, may be adapted to guide such signals to carry them. A carrier medium, in particular a guiding/transporting medium, may comprise the electromagnetic field, e.g. radio waves or microwaves, and/or optically transmissive material, e.g. glass fiber, and/or cable. A storage medium may comprise at least one of a memory, which may be volatile or nonvolatile, a buffer, a cache, an optical disc, magnetic memory, flash memory, etc.

A system comprising one or more radio nodes as described herein, in particular a network node and a user equipment, is described. The system may be a wireless communication system, and/or provide and/or represent a radio access network.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| 3G | Third Generation of Mobile Telecommunications Technology |
| 3GPP | Third Generation Partnership Project |
| 5G | Fifth Generation of Mobile Telecommunications Technology |
| ARP | Allocation Retention Priority |
| BLER | Block Error Rate |
| BSM | Basic Safety Message |
| BSR | Buffer Status Report |
| BW | Bandwidth |
| CA | Carrier Aggregation |
| CAM | Cooperative Awareness Message |
| CBR | Channel Busy Ratio |
| D2D | Device-to-Device Communication |
| DBS | Delay-Based Scheduler |
| DENM | Decentralized Environmental Notification Message |
| DL | Downlink |
| DMRS | Demodulation reference signals |
| DPTF | Data Packet Transmission Format |
| DSRC | Dedicated Short-Range Communications |
| eNB | eNodeB |
| ETSI | European Telecommunications Standards Institute |
| eV2X | Enhanced V2X |
| ID | Identifier |
| IP | Internet Protocol |
| ITS | Intelligent Transport Systems |
| LCG | Logical Channel Group |
| LCID | Logical Channel Identity |
| LTE | Long-Term Evolution |
| MAC | Medium Access Control |
| MAC CE | Medium Access Control - Control Element |
| ME | Mobile Equipment |
| NW | Network |
| OCC | Orthogonal cover code |
| PDB | Packet Delay Budget |
| PDCP | packet data convergence protocol |
| PDCCH | Physical Downlink Control Channel |
| PDU | Protocol Data Unit |
| PPPP | ProSe Per Packet Priority |

| | |
|---|---|
| PRB | Physical Resource Block |
| ProSe | Proximity Services |
| PUCCH | Physical Uplink Control Channel |
| PUSCH | Physical Uplink Shared Channel |
| RRC | Radio Resource Control |
| RS | Reference Signals 3GPP Technical Specification Group on Service and System |
| SA | Aspects |
| SAE | Society of the Automotive Engineers |
| SCI | Sidelink Control Information |
| SDU | Service Data Unit |
| SFN | System Frame Number |
| SIB | System Information Block |
| SL | Sidelink |
| SL-DCH | Sidelink Discovery Channel |
| SL-SCH | Sidelink Shared Channel |
| SLRB | Sidelink Radio Bearer |
| SPS | Semi-Persistent Scheduling |
| TF | Transport Format |
| TTI | Transmission Time Interval |
| UE | User Equipment |
| UICC | Universal Integrated Circuit Card |
| UL | Uplink |
| V2I | Vehicle-to-Infrastructure |
| V2P | Vehicle-to-Pedestrian |
| V2V | Vehicle-to-Vehicle communication |
| V2x | Vehicle-to-everything |

**Claims**

1. A method performed by a wireless device for performing active bandwidth part switching, the method comprising:

   performing a first active bandwidth part switching on a first link for the wireless device;
   determining that a second active bandwidth part switching on a second link for the wireless device is to be performed while the first active bandwidth part switching is ongoing; and
   adapting at least one of the first and second active bandwidth part switching based on a rule, **characterized in that**
   the adapting the at least one of the first and second active bandwidth part switching based on the rule comprises:
   extending a duration of the first active bandwidth part switching by a time period based on a number of ongoing active bandwidth part switching activities on one or more of the first and second links.

2. The method according to claim 1, wherein each of the first and second links is one of an uplink from the wireless device to a base station, an downlink from a base station to the wireless device, and a sidelink between the wireless device and another wireless device.

3. The method according to one of the preceding claims, wherein the rule is predefined in the wireless device or configured by one or more base stations.

4. The method according to one of the preceding claims, wherein the adapting the at least one of the first and second active bandwidth part switching based on the rule further comprises: postponing the second active bandwidth part switching by a time period.

5. The method according to one of the preceding claims, wherein the adapting the at least one of the first and second active bandwidth part switching based on the rule further comprises:

   restarting the first active bandwidth part switching; and
   extending a duration of the second active bandwidth part switching.

6. The method according to one of the preceding claims, wherein the adapting the at least one of the first and second active bandwidth part switching based on the rule further comprises: prioritizing the first and second active bandwidth part switching based on priority levels mapped to the first and second active bandwidth part switching, wherein the priority levels are determined based on characteristics of the first and second links.

7. The method according to one of the preceding claims, wherein the wireless device is capable of performing multiple active bandwidth part switching in parallel, and the adapting the at least one of the first and second active bandwidth part switching based on the rule further comprises:

   receiving an indication from one or more base stations; and
   performing first and second active bandwidth part switching at least partially overlapping in time based on the indication.

8. The method according to one of the preceding claims, wherein the adapting the at least one of the first and second active bandwidth part switching based on the rule further comprises: prioritizing the first and second active bandwidth part switching based on coverage modes of operations on bandwidth parts on the first and second links.

9. The method according to one of the preceding claims, wherein the adapting the at least one of the first and second active bandwidth part switching based on the rule further comprises:

prioritizing the first and second active bandwidth part switching based on an operational mode of the wireless device, wherein the operational modes comprise of a set including include in-coverage, partial coverage, and out-of-network coverage.

10. The method according to one of the preceding claims, wherein the adapting the at least one of the first and second active bandwidth part switching based on the rule further comprises: prioritizing the first and second active bandwidth part switching based on characteristics of signals being transmitting on the first and second links at the same time as the first and second active bandwidth part switching.

11. The method according to one of the preceding claims, wherein the adapting the at least one of the first and second active bandwidth part switching based on the rule further comprises: prioritizing the first and second active bandwidth part switching based on types of bandwidth part switch of the first and second active bandwidth part switching, wherein the types of bandwidth part switch comprise of a set including timer-based, DCI-based, and RRC-based BWP switch.

12. The method according to one of the preceding claims, wherein the adapting the at least one of the first and second active bandwidth part switching based on the rule further comprises: delaying at least one of the first and second active bandwidth part switching based on resource consumption of the at least one of the first and second active bandwidth part switching.

13. Wireless device for a wireless communication network, the wireless device comprising processing circuitry configured to:

   perform a first active bandwidth part switching on a first link;
   determine that a second active bandwidth part switching on a second link is to be performed while the first active bandwidth part switching is ongoing; and
   adapt at least one of the first and second active bandwidth part switching based on a rule,
   **characterized in that**
   the processing circuitry is configured to adapt the at least one of the first and second active bandwidth part switching based on the rule by being configured to:
   extend a duration of the first active bandwidth part switching by a time period based on a number of ongoing active bandwidth part switching activities on one or more of the first and second links.

**14.** The wireless device of claim 13, wherein the processing circuitry is further configured to perform the method according to any one of claims 2 to 12.

**Patentansprüche**

**1.** Verfahren, das von einer drahtlosen Vorrichtung durchgeführt wird, zur Durchführung einer aktiven Bandbreitenteil-Umschaltung, wobei das Verfahren aufweist:

Durchführen einer ersten aktiven Bandbreitenteil-Umschaltung auf einer ersten Verbindung für die drahtlose Vorrichtung;
Bestimmen, dass eine zweite aktive Bandbreitenteil-Umschaltung auf einer zweiten Verbindung für die drahtlose Vorrichtung durchgeführt werden soll, während die erste aktive Bandbreitenteil-Umschaltung im Gange ist;
Anpassen mindestens einer der ersten und der zweiten aktiven Bandbreitenteil-Umschaltung basierend auf einer Regel,
**dadurch gekennzeichnet, dass**
das Anpassen der mindestens einen der ersten und der zweiten aktiven Bandbreitenteil-Umschaltung basierend auf der Regel aufweist:
Verlängern einer Dauer der ersten aktiven Bandbreitenteil-Umschaltung um eine Zeitdauer basierend auf einer Anzahl von laufenden aktiven Bandbreitenteil-Umschaltaktivitäten auf einer oder mehreren der ersten und der zweiten Verbindungen.

**2.** Verfahren nach Anspruch 1, wobei jede der ersten und der zweiten Verbindung einer von einem Uplink von der drahtlosen Vorrichtung zu einer Basisstation, einem Downlink von einer Basisstation zur drahtlosen Vorrichtung und einem Sidelink zwischen der drahtlosen Vorrichtung und einer anderen drahtlosen Vorrichtung ist.

**3.** Verfahren nach einem der vorhergehenden Ansprüche, wobei die Regel in der drahtlosen Vorrichtung vordefiniert ist oder durch eine oder mehreren Basisstationen konfiguriert wird.

**4.** Verfahren nach einem der vorhergehenden Ansprüche, wobei das Anpassen der mindestens einer der ersten und der zweiten aktiven Bandbreitenteil-Umschaltung basierend auf der Regel aufweist: Verschieben der zweiten aktiven Bandbreitenumschaltung um eine Zeitdauer.

**5.** Verfahren nach einem der vorhergehenden Ansprüche, wobei das Anpassen der mindestens einen der ersten und der zweiten aktiven Bandbreitenteil-Umschaltung basierend auf der Regel ferner aufweist:

Neustarten der ersten aktiven Bandbreitenteil-Umschaltung; und
Verlängern einer Dauer der zweiten aktiven Bandbreitenteil-Umschaltung.

**6.** Verfahren nach einem der vorhergehenden Ansprüche, wobei das Anpassen der mindestens einen der ersten und der zweiten aktiven Bandbreitenteil-Umschaltung basierend auf der Regel ferner aufweist: Priorisieren der ersten und der zweiten aktiven Bandbreitenteil-Umschaltung basierend auf Prioritätsstufen, die der ersten und der zweiten aktiven Bandbreitenteil-Umschaltung zugeordnet sind, wobei die Prioritätsstufen basierend auf Charakteristiken der ersten und der zweiten Verbindung bestimmt werden.

**7.** Verfahren nach einem der vorhergehenden Ansprüche, wobei die drahtlose Vorrichtung zum parallelen Durchführen von mehreren aktiven Bandbreitenteil-Umschaltungen imstande ist, und das Anpassen der mindestens einen der ersten und der zweiten aktiven Bandbreitenteil-Umschaltung basierend auf der Regel ferner aufweist:

Empfangen einer Anzeige von einer oder mehreren Basisstationen; und
wobei sich das Durchführen einer ersten und einer zweiten aktiven Bandbreitenumschaltung basierend auf der Anzeige wenigstens teilweise überschneidet.

**8.** Verfahren nach einem der vorhergehenden Ansprüche, wobei das Anpassen der mindestens einen der ersten und der zweiten aktiven Bandbreitenteil-Umschaltung basierend auf der Regel ferner aufweist: Priorisieren der ersten und der zweiten aktiven Bandbreitenteil-Umschaltung basierend auf Versorgungsbetriebsmodi auf Bandbreitenteilen auf der ersten und der zweiten Verbindung.

**9.** Verfahren nach einem der vorhergehenden Ansprüche, wobei das Anpassen der mindestens einen der ersten und der zweiten aktiven Bandbreitenteil-Umschaltung basierend auf der Regel ferner aufweist: Priorisieren der ersten und der zweiten aktiven Bandbreitenteil-Umschaltung basierend auf einem Betriebsmodus der drahtlosen Vorrichtung, wobei die Betriebsmodi einen Satz aufweisen, der mit Versorgung, Teilversorgung und ohne Netzwerkversorgung umfasst.

**10.** Verfahren nach einem der vorhergehenden Ansprüche, wobei das Anpassen der mindestens einen der ersten und der zweiten aktiven Bandbreitenteil-Umschaltung basierend auf der Regel ferner aufweist: Priorisieren der ersten und der zweiten aktiven Bandbreitenteil-Umschaltung basierend auf Charakteristiken von Signalen, die auf der ersten und der zweiten Verbindung simultan zur ersten und zur zweiten aktiven Bandbreitenteil-Umschaltung gesendet werden.

11. Verfahren nach einem der vorhergehenden Ansprüche, wobei das Anpassen der mindestens einen der ersten und der zweiten aktiven Bandbreitenteil-Umschaltung basierend auf der Regel ferner aufweist: Priorisieren der ersten und der zweiten aktiven Bandbreitenteil-Umschaltung basierend auf Bandbreitenteil-Umschaltarten der ersten und der zweiten aktiven Bandbreitenteil-Umschaltung, wobei die Bandbreitenteil-Umschaltarten eine aus einem Satz aufweisen, der zeitgeberbasierte, DCI-basierte und RRC-basierte BWP-Umschaltung umfasst.

12. Verfahren nach einem der vorhergehenden Ansprüche, wobei das Anpassen der mindestens einen der ersten und der zweiten aktiven Bandbreitenteil-Umschaltung basierend auf der Regel ferner aufweist: Verzögern mindestens einer der ersten und der zweiten aktiven Bandbreitenteil-Umschaltung basierend auf einem Ressourcenverbrauch mindestens einer der ersten und der zweiten aktiven Bandbreitenteil-Umschaltung.

13. Drahtlose Vorrichtung für ein drahtloses Kommunikationsnetzwerk, wobei die drahtlose Vorrichtung Verarbeitungsschaltungsanordnung aufweist, die konfiguriert ist zum:

Durchführen einer ersten aktiven Bandbreitenteil-Umschaltung auf einer ersten Verbindung; Bestimmen, dass eine zweite aktive Bandbreitenteil-Umschaltung auf einer zweiten Verbindung durchgeführt werden soll, während die erste aktive Bandbreitenteil-Umschaltung im Gange ist; Anpassen mindestens einer der ersten und der zweiten aktiven Bandbreitenteil-Umschaltung basierend auf einer Regel, **dadurch gekennzeichnet, dass** die Verarbeitungsschaltungsanordnung zum Anpassen der mindestens einen der ersten und der zweiten aktiven Bandbreitenteil-Umschaltung basierend auf der Regel konfiguriert ist, indem sie konfiguriert ist zum: Verlängern einer Dauer der ersten aktiven Bandbreitenteil-Umschaltung um eine Zeitdauer basierend auf einer Anzahl von laufenden aktiven Bandbreitenteil-Umschaltaktivitäten auf einer oder mehreren der ersten und der zweiten Verbindung.

14. Drahtlose Vorrichtung nach Anspruch 13, wobei die Verarbeitungsschaltungsanordnung ferner zum Durchführen des Verfahrens nach einem der Ansprüche 2 bis 12 konfiguriert ist.

**Revendications**

1. Procédé réalisé par un dispositif sans fil pour réaliser une commutation de partie de bande passante active, le procédé comprenant :

la réalisation d'une première commutation de partie de bande passante active sur une première liaison pour le dispositif sans fil ; la détermination qu'une deuxième commutation de partie de bande passante active sur une deuxième liaison pour le dispositif sans fil doit être réalisée pendant que la première commutation de partie de bande passante active est en cours ; et l'adaptation d'au moins l'une parmi les première et deuxième commutations de partie de bande passante actives sur la base d'une règle, **caractérisé en ce que** l'adaptation de l'au moins une parmi les première et deuxième commutations de partie de bande passante actives sur la base de la règle comprend : la prolongation d'une durée de la première commutation de partie de bande passante active d'une période de temps sur la base d'un nombre d'activités de commutation de partie de bande passante active en cours sur une ou plusieurs parmi les première et deuxième liaisons.

2. Procédé selon la revendication 1, dans lequel chacune parmi les première et deuxième liaisons est l'une parmi une liaison montante depuis le dispositif sans fil jusqu'à une station de base, une liaison descendante depuis une station de base jusqu'au dispositif sans fil, et une liaison latérale entre le dispositif sans fil et un autre dispositif sans fil.

3. Procédé selon l'une des revendications précédentes, dans lequel la règle est prédéfinie dans le dispositif sans fil ou configurée par une ou plusieurs stations de base.

4. Procédé selon l'une des revendications précédentes, dans lequel l'adaptation de l'au moins une parmi les première et deuxième commutations de partie de bande passante actives sur la base de la règle comprend en outre : le report de la deuxième commutation de partie de bande passante active d'une période de temps.

5. Procédé selon l'une des revendications précédentes, dans lequel l'adaptation de l'au moins une parmi les première et deuxième commutations de partie de bande passante actives sur la base de la règle comprend en outre :

le redémarrage de la première commutation de partie de bande passante active ; et
la prolongation d'une durée de la deuxième commutation de partie de bande passante active.

**6.** Procédé selon l'une des revendications précédentes, dans lequel l'adaptation de l'au moins une parmi les première et deuxième commutations de partie de bande passante actives sur la base de la règle comprend en outre :
la priorisation des première et deuxième commutations de partie de bande passante actives sur la base de niveaux de priorité mis en concordance avec les première et deuxième commutations de partie de bande passante actives, dans lequel les niveaux de priorité sont déterminés sur la base de caractéristiques des première et deuxième liaisons.

**7.** Procédé selon l'une des revendications précédentes, dans lequel le dispositif sans fil est capable de réaliser de multiples commutations de partie de bande passante actives en parallèle, et l'adaptation de l'au moins une parmi les première et deuxième commutations de partie de bande passante actives sur la base de la règle comprend en outre :

la réception d'une indication depuis une ou plusieurs stations de base ; et
la réalisation de première et deuxième commutations de partie de bande passante actives se chevauchant au moins partiellement dans le temps sur la base de l'indication.

**8.** Procédé selon l'une des revendications précédentes, dans lequel l'adaptation de l'au moins une parmi les première et deuxième commutations de partie de bande passante actives sur la base de la règle comprend en outre :
la priorisation des première et deuxième commutations de partie de bande passante actives sur la base de modes de couverture d'opérations sur des parties de bande passante sur les première et deuxième liaisons.

**9.** Procédé selon l'une des revendications précédentes, dans lequel l'adaptation de l'au moins une parmi les première et deuxième commutations de partie de bande passante actives sur la base de la règle comprend en outre :
la priorisation des première et deuxième commutations de partie de bande passante actives sur la base d'un mode opérationnel du dispositif sans fil, dans lequel les modes opérationnels se composent d'un ensemble incluant en couverture de réseau, en couverture partielle et hors couverture de réseau.

**10.** Procédé selon l'une des revendications précédentes, dans lequel l'adaptation de l'au moins une parmi les première et deuxième commutations de partie de bande passante actives sur la base de la règle comprend en outre :
la priorisation des première et deuxième commutations de partie de bande passante actives sur la base de caractéristiques de signaux en cours de transmission sur les première et deuxième liaisons en même temps que les première et deuxième commutations de partie de bande passante actives.

**11.** Procédé selon l'une des revendications précédentes, dans lequel l'adaptation de l'au moins une parmi les première et deuxième commutations de partie de bande passante actives sur la base de la règle comprend en outre :
la priorisation des première et deuxième commutations de partie de bande passante actives sur la base de types de commutation de partie de bande passante des première et deuxième commutations de partie de bande passante actives, dans lequel les types de commutation de partie de bande passante se composent d'un ensemble incluant des commutations de partie de bande passante (BWP) à base de minuterie, à base de DCI et à base de RRC.

**12.** Procédé selon l'une des revendications précédentes, dans lequel l'adaptation de l'au moins une parmi les première et deuxième commutations de partie de bande passante actives sur la base de la règle comprend en outre :
le retardement d'au moins l'une parmi les première et deuxième commutations de partie de bande passante actives sur la base d'une consommation de ressources de l'au moins une parmi les première et deuxième commutations de partie de bande passante actives.

**13.** Dispositif sans fil pour un réseau de communication sans fil, le dispositif sans fil comprenant une circuiterie de traitement configurée pour :

réaliser une première commutation de partie de bande passante active sur une première liaison ;
déterminer qu'une deuxième commutation de partie de bande passante active sur une deuxième liaison doit être réalisée pendant que la première commutation de partie de bande passante active est en cours ; et
adapter au moins l'une parmi les première et deuxième commutations de partie de bande passante actives sur la base d'une règle,
**caractérisé en ce que**
la circuiterie de traitement est configurée pour adapter l'au moins une parmi les première et deuxième commutations de partie de bande passante actives sur la base de la règle en étant configurée pour :

prolonger une durée de la première commutation de partie de bande passante active d'une période de temps sur la base d'un nombre d'activités de commutation de partie de bande passante active en cours sur une ou plusieurs parmi les première et deuxième liaisons.

**14.** Dispositif sans fil selon la revendication 13, dans lequel la circuiterie de traitement est en outre configurée pour réaliser le procédé selon l'une quelconque des revendications 2 à 12.

FIG. 1A

Sidelink
communication
through PC5
152

FIG. 1B

**FIG. 2**

**FIG. 3**

Start BWP
switch on L1

End BWP
switch on L1

Start BWP
switch on L2

End BWP
switch on L2

T1

T2

Time

# FIG. 4

Ts1

Te1

L1 e.g. DL

T1

ΔT1

T1'

Ts2

Te2

L2 e.g. SL

T2

ΔT2

T2'

Time

# FIG. 5

in coverage          out-of-coverage          partial coverage

# FIG. 6

Perform a first active bandwidth part switching on a first link for the wireless device. 702

Determine that a second active bandwidth part switching on a second link for the wireless device is to be performed while the first active bandwidth part switching is ongoing. 704

Adapt at least one of the first and second active bandwidth part switching based a rule (as explained in the first to twelfth examples). 706

# FIG. 7

1 Radio frame (e.g., 10 ms)
802

1 Subframe (e.g.,
1 ms) 804

Frequency (e.g., subcarriers with spacing) 832

· · ·          · · ·          · · ·          · · ·

1 Slot of N (e.g., 7 or 14)
OFDM symbols 806

**FIG. 8A**

Δf = 15 kHz

One resource element   854

One OFDM symbol including cyclic prefix   852

**FIG. 8B**

Figure 9

910b Wireless Device

910c Wireless Device

906 Network

960b Network Node

970 Wireless Signal

962 Antenna(s)

**910 Wireless Device**

911 Antenna(s)

**914 Interface**

912 Radio Front End Circuitry

918 Filter(S) | 916 Amplifier(S)

922 RF Tranceiver Circuitry | 926 Application Processing Circuitry

924 Baseband Circuitry | 920 Processing Circuitry

937 Power Circuitry

930 Device Readable Medium | 932 User Interface Equipment

934 Auxiliary Equipment

936 Power Source

**960 Network Node**

992 Radio Front End Circuitry | 994 Port(s)/Terminal(s)

998 Filter(s)

996 Amplifier(s) | 990 Interface

972 RF Tranceiver Circuitry

974 Baseband Circuitry | 970 Processing Circuitry

987 Power Circuitry

980 Device Readable Medium

984 Auxiliary Equipment

986 Power Source

EP 3 970 403 B1

38

**Figure 10**

Figure 11

1100

**1120** Application

**1120** App

**1120** App

...

**1120** Application / virtual appliance / virtual node or server / instance

**1140 VM**

**1140 VM**

...

**1140 VM**

**1140 VM**

**1150 Virtualization Layer**

**1150 Virtualization Layer**

**11225** Antenna(s)

**11200** Radio Unit

**11210** Receiver

**11220** Transmitter

**11100** Management and orchestration

**1130 HW**

**1160 Processing circuitry**

**1190-1 Memory** | 1195

**1170 NIC**

1180 Physical NI

**1190-2 Non transitory storage**

1195 Instr.

...

**1130 HW**

**1160 Processing circuitry**

**1190-1 Memory** | 1195

**1170 NIC**

1180 Physical NI

**1190-2 Non transitory storage**

1195 Instr.

**11225** Antenna(s)

**11230** Control System

EP 3 970 403 B1

Figure 12

EP 3 970 403 B1

**1310 Host computer**

**1311 SW**

1312
Host application

**1315 HW**

1316
Communication interface

1318
Processing circuitry

1360

**1320 Base station**

**1321 SW**

**1325 HW**

1326
Communication interface

1327
Radio interface

1328
Processing circuitry

1370

1300

**1330 UE**

**1331 SW**

1332
Client application

**1335 HW**

1336
Radio interface

1338
Processing circuitry

1350

Figure 13

BEGIN

| 1410 Host computer provides user data | ↔ | 1411 Host computer executes host application |

1420
Host computer initiates transmission carrying the user data to the UE

1430
Base station transmits the user data

1440
UE executes client application

END

Figure 14

**Figure 15**

BEGIN

1510
Host computer provides user data

1520
Host computer initiates transmission carrying the user data to the UE

1530
UE receives the user data

END

**BEGIN**

**1610**
UE receives input data provided at host computer

**1611**
UE executes client application

**1620**
UE provides user data

**1621**
UE executes client application

**1630**
UE initiates transmission of the user data to the host computer

**1640**
Host computer receives user data transmitted from the UE

**END**

**Figure 16**

BEGIN

**1710**
Base station receives user data from UE

**1720**
Base station initiates transmission of user data to the host computer

**1730**
Host computer receives the user data

END

**Figure 17**